# EUROPÄISCHE PATENTSCHRIFT

(11) **EP 2 189 814 B1**
(45) Veröffentlichungstag und Bekanntmachung des Hinweises auf die Patenterteilung: **21.07.2010**
(21) Anmeldenummer: 08105846.3
(22) Anmeldetag: 21.11.2008
(51) Int. Cl.: G01S 17/10

(54) **Optoelektronischer Sensor und Verfahren zur Messung von Entfernungen nach dem Lichtlaufzeitprinzip**
Optoelectronic sensor and method for measuring distance in accordance with the light-crossing time principle
Capteur optoélectronique et procédé destiné à la mesure d'éloignements selon le principe du temps de propagation de la lumière

(43) Veröffentlichungstag der Anmeldung: 26.05.2010
(73) Patentinhaber: SICK AG, 79183 Waldkirch/Breisgau (DE)
(72) Erfinder: Heizmann, Reinhard, 79286, Glottertal (DE); Hug, Gottfried, 79183, Waldkirch (DE); Marra, Martin, 79117, Freiburg (DE); Torabi, Bahram Dr., 79100, Freiburg (DE)
(74) Vertreter: Hehl, Ulrich

(56) Entgegenhaltungen:
- DE-A1-102007 013 714
- GB-A- 2 286 496
- US-A- 3 992 615

## Beschreibung

Die Erfindung betrifft einen optoelektronischen Sensor und ein Verfahren zur Messung von Entfernungen nach dem Lichtlaufzeitprinzip gemäß des Anspruchs 1 beziehungsweise 12.

Mit optoelektronischen Sensoren kann nach dem bekannten Prinzip des Lichtlaufzeitverfahrens die Entfernung von Objekten bestimmt werden. Dazu wird bei einem Pulslaufzeitverfahren ein kurzer Lichtpuls ausgesendet und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Aufgrund von Augenschutzbedingungen sind die zuletzt genannten Phasenmodulationsverfahren gerade bei gering remittierenden Targets wegen der erforderlichen großen Integrationszeiten weniger geeignet. Beim Pulsverfahren lässt sich die integrale Leistung dahingehend gewinnbringend nutzen, dass kurze Pulse mit hoher Energiedichte gesendet werden können und das Signal-Rauschverhältnis somit für den Einzelschuss verbessert wird.

Die Entfernungsmessung kann beispielsweise in der Fahrzeugsicherheit, der Logistik- oder Fabrikautomatisierung oder der Sicherheitstechnik benötigt werden. Insbesondere kann ein Entfernungsmesser, der auf einem reflektierten Lichtstrahl basiert, auf eine Entfernungsänderung des Reflektors oder des reflektierenden oder remittierenden Ziels reagieren. Eine besondere Anwendung ist eine Reflexionslichtschranke, bei welcher der Abstand zwischen Lichtsender und Reflektor überwacht wird. Das Lichtlaufzeitverfahren ist auch das Prinzip, nach dem entfernungsmessende Laserscanner arbeiten, deren Fahrstrahl eine Linie oder sogar eine Fläche ausmisst.

Soll die Auflösung der Entfernungsmessung eine Genauigkeit im Bereich einiger zehn Millimeter erreichen, so muss die Lichtlaufzeit in einer Größenordnung von hundert Pikosekunden genau bestimmt werden. Um eine Distanzauflösung von einem Millimeter zu erreichen, müssen sechs Pikosekunden messtechnisch erfasst werden. Eine derartige Präzision ist mit herkömmlichen Systemen nur mit sehr kostenintensiver Elektronik realisierbar.

Kostengünstigere Bausteine wie FPGAs (Field Programmable Gate Array) und andere programmierbare digitale Logikbausteine haben typischerweise Arbeitsfrequenzen im Bereich einiger hundert MHz. Damit lassen sich Nanosekunden, nicht aber Pikosekunden auflösen.

Ein herkömmlicher Ausweg ist, den empfangenen Lichtpuls mit der verfügbaren Abtastrate zu digitalisieren und dann durch Interpolation der erwarteten Empfangspulsform die Lage und damit den Empfangszeitpunkt auch mit einer besseren Auflösung zu bestimmen, als die Abtastrate vorgibt. Dies ist aber in seiner Genauigkeit begrenzt und durch die Interpolation verhältnismäßig rechenintensiv.

Aus der DE 10 2007 013 714 A1 ist bekannt, die durch das Abtastraster vorgegebene Körnung dadurch zu umgehen, dass der Sendezeitpunkt verschoben wird. Hierfür wird in einem ersten Schritt eine Grobverstellung des Sendezeitpunkts im Abtastraster vorgenommen, bis eine Übergangsbedingung des Empfangspulses im Bereich eines zeitlich fixierten Rasterpunktes liegt, und anschließend so lange der Sendezeitpunkt feinverstellt, bis der erste Nulldurchgang des Empfangssignals auf dem Rasterpunkt liegt. Die erforderliche Sendezeitverzögerung ist dann ein Messwert für die Lichtlaufzeit. In einer bevorzugten Ausführungsform als Taster wird dieses Verfahren nur vor dem eigentlichen Betrieb in einer Einlernphase ausgeführt. Im Betrieb wird überwacht, ob der Nulldurchgang vor oder hinter dem eingelernten Rasterpunkt liegt. Aus dieser Information kann ein Schaltereignis abgeleitet werden.

Dieses herkömmliche System hat für eine Entfernungsmessung ohne Taster- oder Schaltfunktion einige Nachteile. Zunächst kann die Grobverstellung ein falsches Messfenster ausgeben, in dem beispielsweise ein Rauschereignis nur dem Empfangspuls ähnelt, oder in dem ein Reflex etwa von einer Frontscheibe liegt, der gar nicht gemessen werden soll. Mit dynamischen Situationen kann das System erst recht nicht umgehen: Wird das Ziel bewegt, so ist die Übergangsbedingung nicht mehr erfüllt. Eine Korrektur oder eine neue Erhebung des Messwertes wird dann aber nicht vorgenommen. Das System würde auch viel Zeit verlieren, um sich mit seinem relativ umständlichen Verfahren überhaupt auf ein neues Ziel einstellen zu können, selbst wenn beispielsweise der Teachknopf gedrückt würde, um eine Anpassung an die veränderte Situation vorzunehmen.

Es ist daher Aufgabe der Erfindung, eine Entfernungsmessung nach dem Lichtlaufzeitprinzip anzugeben, welche auch in dynamischen Situationen eingesetzt werden kann.

Diese Aufgabe wird durch einen optoelektronischen Sensor gemäß Anspruch 1 beziehungsweise ein Verfahren zur Messung von Entfernungen nach dem Lichtlaufzeitprinzip gemäß Anspruch 12 gelöst.

Die erfindungsgemäße Lösung geht von dem Prinzip aus, eine Messung nicht als einmaligen Vorgang zu betrachten, bei dem beispielsweise wie im oben beschriebenen Stand der Technik der Messwert bestimmt und ausgegeben wird, ohne dass der Sensor dann weiterhin aktiv bliebe. Stattdessen wird die aktuell verfügbare Information ständig genutzt, um das Messergebnis aktuell zu halten.

Die Erfindung hat den Vorteil, dass stets ein genauer und gültiger Messwert verfügbar ist, weil die Regelung die Messung stets nachführt. Fehler durch Rauschen oder Dynamik im Überwachungsbereich werden vermieden. Der Regler arbeitet schwellenlos. Selbst für eine einmalige Messung ohne anschließende Regelung wäre das Vorgehen überlegen, weil der Regelungsalgorithmus den Messwert in viel kürzerer Zeit auffindet als eine Intervallschachtelung oder ein sequentielles Verschieben, wie dies in der DE 10 2007 013 714 A1 offenbart ist. Ist der Regler in wenigen Zyklen eingeschwungen, so steht von diesem Zeitpunkt an über die erforderliche Sendeverzögerungszeit ein genauer Entfernungsmesswert zur Verfügung. Bereits während des Einschwingens wird eine Approximation bestimmt, die dann durch die Regelung einen immer genaueren Messwert liefert.

Es wird demnach auf einen relativ zum Sendezeitpunkt festen Beobachtungszeitpunkt geregelt, dessen Wahl weitgehend beliebig ist, aber unabhängig von der Messung vorgegeben wird. Der Beobachtungszeitpunkt bleibt immer derselbe, obwohl die Erfindung nicht grundsätzlich verbietet, ihn zu wechseln. Für die Regelung muss dieser Beobachtungszeitpunkt nur bekannt sein, er wird durch die Regelung nicht verändert und beeinflusst die Regelung nicht, sofern er nur zulässig gewählt ist. Beispielsweise wird der Beobachtungszeitpunkt auf die maximale Messentfernung, auf das Ende eines Messintervalls kurz vor Aussenden des nächsten Lichtsignals oder Bruchteile davon gelegt. Die somit immer gleiche Beobachtungszeit ist die Summe aus der vom Regler eingestellten Sendeverzögerungszeit, welche die Steuergröße für den Regler ist, und der Lichtlaufzeit, so dass letztere einfach bestimmt werden kann. Konstante Zeitanteile wie elektrische Signallaufzeiten werden am besten vorab durch Kalibrierung eliminiert.

Die Auswertungseinheit ist bevorzugt dafür ausgebildet, in jeweils einer Messperiode zu einem von dem Regler über die Sendeverzögerungszeit vorgegebenen Sendezeitpunkt das Aussenden eines Lichtsignals auszulösen und das empfangene Lichtsignal abzutasten sowie über eine Vielzahl von Messperioden ein Histogramm von derart empfangenen Lichtsignalen zu akkumulieren, um aus dem Histogramm den Empfangszeitpunkt und daraus die Lichtlaufzeit zu bestimmen, wobei die Überprüfung der Übergangsbedingung für das Empfangssignal in dem Histogramm erfolgt. Die in dem Histogramm akkumulierten Empfangssignale heben sich aus dem Rauschuntergrund heraus, so dass die Messung überhaupt ermöglicht oder zumindest genauer wird. In dieser Beschreibung wird deshalb der Begriff Empfangssignal häufig nicht nur für das Empfangssignal zu einem einzelnen Sendesignal verwendet, sondern auch für das akkumulierte Empfangssignal, dass sich in dem Histogramm herausbildet.

In dem Empfangspfad zwischen Lichtempfänger und Auswertungseinheit ist bevorzugt ein Filterelement vorgesehen, um das unipolare Empfangssignal in ein bipolares Signal umzuwandeln, wobei die Übergangsbedingung insbesondere einen Nulldurchgang von erstem Maximum auf erstes Minimum des bipolaren Signals umfasst. Mit bipolarem Signal ist auch eine (Nach)schwingung umfasst. Die Übergangsbedingung entspricht auf der Zeit/Abstandsachse dem Sollwert der Regelung beziehungsweise dem Wert des zu ermittelnden Abstands. Das Filter kann Teil des digitalen Bausteins der Auswertungseinheit sein, bevorzugt ist es aber ein analoges Bauteil, da sonst zuvor bereits zu viele Signalanteile verloren gegangen sind und die Genauigkeit beeinträchtigt wird. Das Filter kann beispielsweise ein Differenzierer oder ein Bandpass sein. Es ist denkbar, die Übergangsbedingung über ein anderes und auch komplexeres Charakteristikum zu definieren, also einen späteren Nulldurchgang oder einen Wendepunkt. Man könnte dazu die Extrema selbst heranziehen, zwischen denen der Nulldurchgang liegt, aber dessen Ausprägung ist pegelabhängig und deshalb weniger robust, oder mehrere Charakteristika bzw. Nulldurchgänge heranziehen, um die Genauigkeit weiter zu erhöhen.

Vorteilhafterweise entspricht ein Regelzeitintervall, innerhalb dessen der Regler die Übergangsbedingung prüfen und die Sendeverzögerung nachführen kann, nur einem Teilbereich eines Messbereichs des Sensors, wobei eine Positionswechsel-Überwachungseinheit vorgesehen ist, um periodisch zu überprüfen, zu welchem Zeitpunkt das Empfangssignal empfangen wird und, falls dieser Zeitpunkt außerhalb des Regelzeitintervalls liegt, dem Regler ein neues Regelzeitintervall vorzugeben. Der Regler arbeitet damit stets in einer Umgebung des gesuchten Messwerts, konvergiert also schnell und verharrt nicht fälschlich auf einem Rauschsignal oder inzwischen nicht mehr vorhandenen Ziel. Das Auffinden des Empfangssignals ist in diesem Zusammenhang nur im Abtastraster möglich und notwendig, keine genaue Messung, damit der Regler einen sinnvollen Arbeitsbereich erhält. Beispielsweise kann das Regelzeitintervall so gewählt sein, dass es einen monotonen Teil der ersten abfallenden Flanke des Empfangssignals enthält, um ohne Gefahr eines Sprungs auf den ersten Nulldurchgang regeln zu können. Vorgeben eines Regelzeitintervalls bedeutet also die Grobeinstellung der Sendeverzögerungszeit. Der Beobachtungszeitpunkt wird dabei nicht gewechselt, jedenfalls ist dies nicht nötig, wenn er zu Anfang mit genügend Abstand gewählt wurde. Dieses Vorgehen lässt eine sehr schnelle Annäherung an einen neuen Messwert zu.

Dabei ist die Positionswechsel-Überwachungseinheit oder die Auswertungseinheit bevorzugt dafür ausgebildet, vorab den Rauschpegel als Bezugspunkt zu bestimmen. Dazu kann im Histogramm über alle oder eine Auswahl der Bins gemittelt werden.

Die Positionswechsel-Überwachungseinheit ist bevorzugt dafür ausgebildet, das Empfangssignal anhand einer Signatur zu erkennen, insbesondere einem alternierenden Wechsel von Maxima auf Minima und umgekehrt, welche jeweils eine abfallende, insbesondere logarithmische Hüllkurve bilden. Eine Signatur erfasst die wesentlichen Merkmale eines Funktionsverlaufs, ist damit im Gegensatz zu einem Vergleich mit dem gesamtem Funktionsverlauf schneller auswertbar und trotz Schwankungen erkennbar. Diese Signatur kann einfach oder komplex sein, je nachdem, ob Auswertungszeit oder Genauigkeit im Vordergrund steht. Sie sollte robust gegen Rauschen, schnell auswertbar und möglichst unverwechselbar sein. Wie viele der alternierenden Wechsel dafür vorhanden und wie genau die Amplituden der zugehörigen Hüllkurve getroffen sein müssen, kann demnach für die Anwendung optimiert werden. Die Signatur kann über den gesamten Überwachungsbereich mehrfach aufgefunden sein, beispielsweise durch Mehrfachreflexionen. Daher sollte die jeweils ausgeprägtestes Signatur die Festlegung des Regelzeitintervalls bestimmen, was oft diejenige ist, die mit dem stärksten Maximum beginnt, das im Überwachungsbereich gefunden wird. Die Signatur sollte so gewählt und ausgeprägt sein, dass der Regler die Übergangsbedingung finden kann.

Die Positionswechsel-Überwachungseinheit ist bevorzugt dafür ausgebildet, eine Historie zu speichern, welches Regelzeitintervall sie jeweils bei der periodischen Überprüfung dem Regler vorgegeben hätte, um dem Regler dasjenige Regelzeitintervall vorzugeben, welches gemäß einer statistischen Auswertung dieser Historie dasjenige des Empfangssignals ist. Damit werden kurze oder einmalige Ereignisse zunächst nicht berücksichtigt, so dass ein überhastetes Springen vermieden wird. Erst wenn etwas nachhaltiger ein besseres Regelzeitintervall gefunden ist, wird auch der Regler versetzt. Dabei ist eine gewisse Trägheit für das aktuelle Regelzeitintervall bevorzugt, die sich in einem höheren statistischen Gewicht in der Historie widerspiegeln kann. Besonders wenn die statistische Auswertung sich nicht oder nur knapp zwischen zwei oder mehr Regelzeitintervallen entscheiden kann, sollte so lange das aktuelle Regelzeitintervall bevorzugt werden, bis eine klare Entscheidung getroffen werden kann.

Die Positionswechsel-Überwachungseinheit weist bevorzugt einen Agenten auf, also einen ständig oder in regelmäßigen zugeteilten Zeitschlitzen aktiven und von dem Regler unabhängigen Prozess, wobei der Agent das Ziel hat, ein gültiges Regelzeitintervall aufzufinden und dem Regler vorzugegeben, in dem das Lichtsignal tatsächlich empfangen wird. Ein solcher (Software)-Agent entkoppelt die eigentliche Regelung und das Auffinden des Regelzeitintervalls, ist daher robuster und leichter zu handhaben. Der Agent hat nicht nur das Ziel, anfänglich ein richtiges Regelzeitintervall zu finden, sondern dieses Regelzeitintervall stets zu überprüfen und gegebenenfalls zu korrigieren, also im Ergebnis ein ständiges Tracking des Messwerts vorzunehmen. Der Agent reagiert damit übergeordnet auf Rauschen oder Dynamik im Überwachungsbereich und reagiert durch ein Versetzten des Reglers auf ein sinnvolles Regelzeitintervall, in dem das gesuchte Empfangssignal oder die gesuchte Signatur wirklich zu finden ist. Die Unabhängigkeit des Prozesses kann tatsächlich in einem eigenen Hardwarepfad oder, in Softwaresprache, im Sinne eines eigenen Thread oder Task implementiert sein. Man kann sie aber auch lediglich konzeptionell verstehen, während die reale Implementierung den Agenten beispielsweise als periodisch aufgerufenen Teil des Reglers umsetzt.

Die Auswertungseinheit ist bevorzugt dafür ausgebildet, dem Regler Sendezeitverzögerungen zur Verfügung zu stellen, die einem Vielfachen einer Abtastperiode für das Empfangssignal entsprechen. Damit kann die Sendezeitverzögerung auf einfache Weise grob über die gesamte Messstrecke eingestellt werden. Mit Vielfachem ist hier auch das 0- und 1-fache gemeint, um wirklich alle Abtastpunkte erreichen zu können. Einen Zeittakt für das Abtastraster stellt die Auswertungseinheit beziehungsweise der digitale Baustein, auf dem sie implementiert ist, meist unmittelbar bereit.

Mit weiteren Ausführungsformen kann die Genauigkeit innerhalb einer Abtastperiode weiter erhöht werden. Zunächst wird mit Hilfe einer Zeitbasiseinheit ermöglicht, auch mit einer Auflösung unterhalb der Abtastperiode Lichtsignale tatsächlich auszusenden. Eine Sendezeit-Feineinstellung ermöglicht auch innerhalb dieser Körnung noch eine feinere Einstellung einer sogenannten angestrebten Sendezeit, also einer wirksamen Sendezeit, die durch mehrere Sendesignale zu durch die Körnung bestimmten Zeitpunkten erreicht wird. Es entsteht ein dreistufiges System, bei dem die feinste Stufe durch Verteilungen mehrere Sendesignale erzeugt, die zweite Stufe durch die Zeitbasiseinheit, welche die möglichen Zeitpunkte für tatsächliche Sendesignale festlegt, und die gröbste Stufe, die durch das Abtastraster gegeben ist. Die Zeitinkrements einer feineren Stufe müssen nur jeweils eine Periode der nächstgröberen Stufe füllen, um lückenlos mit der feinsten Zeitauflösung arbeiten zu können. Es ist genauso denkbar, jeweils mehr als eine Periode abzudecken. So kann auf einzelne der Stufen verzichtet werden, wenn einerseits auf die höhere Auflösung verzichtet wird oder andererseits den Aufwand für das umständlichere Füllen größerer Zeitintervalle durch feine Zeitinkrements nicht scheut. Die ineinander verzahnte Kombination, bei der jede Stufe nur die Periode der nächstgröberen Stufe füllt und bei der alle Stufen existieren, ergibt höchste Auflösung bei geringstem Aufwand.

Entsprechend ist bevorzugt eine Zeitbasiseinheit vorgesehen, die eine DDS aufweist oder dafür ausgebildet ist, Sendezeitverzögerungen aus einem ersten Zeittakt mit einer ersten Frequenz und einem zweiten Zeittakt mit einer zu der ersten Frequenz ungleichen zweiten Frequenz abzuleiten und somit Sendezeitverzögerungen mit einer durch die zu der ersten und zweiten Frequenz gehörige Differenzperiode gegebenen zeitlichen Auflösung dem Regler zur Verfügung zu stellen. Indem Buch geführt wird, in welcher Periode sich die beiden Frequenzen jeweils befinden, lassen sich damit Zeitintervalle auskoppeln, deren Genauigkeit durch die Differenzperiode gegeben ist, die wiederum bei nur leicht unterschiedlichen Frequenzen sehr klein sein kann. Es ist wichtig anzumerken, dass die Auflösung nicht notwendig gleich der Differenzperiode ist. Bei einem Verhältnis der beiden Frequenzen von n/(n+1) ist dies der Fall, und ein solches Verhältnis ist auch bevorzugt. Das Beispiel anderer teilerfremder Zahlen wie etwa 3/8 zeigt, dass zwar die Differenzfrequenz 5 die Genauigkeit festlegt, aber nicht mit ihr identisch ist, denn auch in einem solchen System ist das kleinstmögliche Offset 1. Die Offsets steigen hier nicht monoton mit der Zeit an, aber nach einer Sortierung sind sämtliche erforderlichen Offsets ebenso vorhanden wie im übersichtlicheren Fall n/(n+1). Bei dieser Betrachtung wurden die Einheiten herausgekürzt, die Überlegung ändert sich nicht, wenn man jede Zahl mit einer gemeinsamen Grundfrequenz beispielsweise von 10 MHz multipliziert. Die Zeitbasiseinheit ermöglicht auf kostengünstige Weise mit einfachen Schaltungen oder Softwarelösungen bereits für die tatsächlichen Sendezeitpunkte ein Zeitraster, welches feiner ist als durch den digitalen Baustein oder das Abtastraster zunächst vorgegeben. Die angestrebten Sendezeitpunkte, also die Schwerpunkte der Offsetverteilungen, verfeinern dieses Zeitraster noch weiter, führen insbesondere zu einem Vielfachen der Auflösung.

Die Zeitbasiseinheit ist bevorzugt dafür ausgebildet, die erste Frequenz und die zweite Frequenz aus einem Mastertakt abzuleiten, der auch den Referenzzeitpunkt bestimmt, und die erste Frequenz und die zweite Frequenz regelmäßig auf den Mastertakt zu synchronisieren. Damit ist nur ein stabiler Taktgeber erforderlich, und die beiden Frequenzen können maximal über das Synchronisationsfenster auseinanderlaufen. Dabei kann die Synchronisierung jedes Mal erfolgen, wenn die Perioden theoretisch zusammenfallen müssten, im Beispiel von 400 MHz und 410MHz also alle 100ns, oder nur jedes n-te Mal, also in Vielfachen von 100ns.

Die Zeitbasiseinheit weist bevorzugt eine erste PLL mit einem ersten Teiler des Mastertakts für die erste Frequenz und eine zweite PLL mit einem zweiten Teiler des Mastertakts für die zweite Frequenz auf, wobei insbesondere der erste Teiler und der zweite Teiler so gewählt sind, dass eine möglichst kleine Differenzperiode im Bereich einiger hundert, einiger zehn oder einiger Pikosekunden entsteht. Ein Zahlenbeispiel ist ein Mastertakt von 10MHz und ein Teilerpaar 40/41. Je nach Stabilität der PLLs und Vorgaben der verwendeten digitalen Bausteine können größere Teiler und damit kürzere Einstellmöglichkeiten vorgesehen sein. Die beiden Teiler sollten untereinander teilerfremd sein, bevorzugt die Relation n und n+1 erfüllen. Eine nicht teilerfremde Wahl führt zu keiner Verbesserung, etwa bei 5 und 10, oder zu einer nicht optimal ausschöpfenden Verbesserung, etwa bei 42 und 40.

Die Auswertungseinheit und/oder die Zeitbasiseinheit ist bevorzugt auf einem digitalen Logikbaustein, insbesondere einem FPGA (Field Progammable Gate Array), PLD (Programmable Logic Device), ASIC (Application-Specific Integrated Circuit) oder DSP (Digital Signal Processor) implementiert. Solche digitalen Baussteine ermöglichen eine an die Anwendung angepasste Auswertung und eine einfache Erzeugung der benötigten beiden Frequenzen, etwa wenn das FPGA bereits PLLs mit einstellbaren Teilern mitbringt.

Die Zeitbasiseinheit weist bevorzugt einen ersten Zähler und einen zweiten Zähler auf, um die vollständigen Perioden der ersten beziehungsweise zweiten Frequenz zu zählen, wobei die Zähler insbesondere getriggerte Schieberegister aufweisen und wobei die Zeitbasiseinheit dafür ausgebildet ist, die zeitliche Verschiebung als Zeitintervall zwischen der n-ten Periode der ersten Frequenz und der m-ten Periode der zweiten Frequenz zu erzeugen. Ein Pärchen aus bestimmten Perioden der beiden Frequenzen liefert Zeitinkrements unterhalb eines durch die Abtastung vorgegebenen Zeitrasters. Erfüllen die Frequenzen die oben genannte n, n+1 - Relation, so ist die Sortierung einfacher. Es genügt, wenn Pärchen verfügbar sind, um eine Abtastperiode zu füllen, da größere Zeiten dann durch Addition von ganzen Abtastperioden erzeugbar sind. Alternativ kann man aber auch Pärchen über eine Abtastperiode hinaus auswerten. Mit jeder oder jeder n-ten Synchronisierung werden die Zähler dementsprechend zurückgesetzt.

Die Zeitbasiseinheit ist bevorzugt dafür ausgebildet, die zeitliche Verschiebung um Perioden der ersten Frequenz, der zweiten Frequenz oder des Mastertakts zu verlängern. Damit können beliebig längere zeitliche Verschiebungen erzeugt werden.

Gemäß der oben genannten feinsten Stufe, die kumulativ oder alternativ zu der Zeitbasiseinheit eingesetzt werden kann, ist weiterhin bevorzugt eine Sendezeit-Feineinstelleinheit vorgesehen, welche dafür ausgebildet ist, den jeweiligen Sendezeitpunkt innerhalb der Messperioden um ein Offset zu verschieben, wobei die Offsets eine Verteilung bilden, deren Schwerpunkt einen angestrebten Sendezeitpunkt bildet und der mit einer zeitlichen Auflösung gewählt werden kann, welche besser ist als sowohl die Abtastperiode wie die Differenzperiode, insbesondere mit einer zeitlichen Auflösung von weniger als zehn Pikosekunden oder sogar weniger als einer Pikosekunde.

Nicht das diskrete Zeitraster wird hier weiter verfeinert, sondern die zeitliche Auflösung trotz eines bestehenden Zeitrasters über dessen Auflösung hinaus erhöht. Dabei bildet das durch die Zeitbasiseinheit verfeinerte Zeitraster für tatsächliche Sendezeitpunkte eine besonders gute Ausgangslage. Die zeitliche Lage der ausgesandten Lichtsignale wird dann zwar für den Einzelschuss nicht gegenüber dem Zeitraster verbessert, sehr wohl aber für eine Gruppe von Einzelschüssen. Der angestrebte Sendezeitpunkt, also letztlich eine Phase der Gruppe von Einzelschüssen, wird über Bincounts und damit eigentlich einen über statistische Amplitudeninformation eingestellten Schwerpunkt erreicht. Die Freiheitsgrade für die Schwerpunktslage wiederum sind prinzipiell unbeschränkt, da sie nur von der Anzahl Wiederholungen, also der Vielzahl der Messperioden abhängt. Damit wird zeitliche Präzision mit Ansprechzeit kompensiert, wobei die für die meisten Anwendungen keine Rolle spielt, da eine hinreichende Zahl Widerholungen schon in sehr kurzer Zeit erfolgt, so dass der Überwachungsbereich oder das Ziel weiterhin als quasistatisch angenommen werden können. Technische Grenzen für die Einstellung des tatsächlichen Sendezeitpunkts eines jeden einzelnen Lichtsignals sind somit überwunden. Der wirksame Sendezeitpunkt kann mit praktisch beliebiger Genauigkeit gewählt werden und ermöglicht damit höchste Messgenauigkeit. Die angestrebten Sendezeiten sind weder auf ein Zeitraster der Digitalisierung oder einen Arbeitstakt eines digitalen Bausteins angewiesen, noch auf die kleinstmöglichen Verschiebung für den Sendezeitpunkt. Die erreichte Präzision im Pikosekundenbereich oder sogar darunter ist für die Abtastung selbst nicht oder nur mit sehr großem Aufwand erreichbar. Diese Ausführungsform ermöglicht letztlich mit einer geschickten Programmierung eines digitalen Bausteins, also einer sehr kostengünstigen Lösung, auf derart aufwändige Hardware zu verzichten beziehungsweise die Grenzen solcher Hardware zu überwinden.

Dabei ist zu betonen, dass Sendezeitpunkte jeweils nicht absolut, sondern relativ zum Empfangszeitpunkt zu verstehen sind. Somit ist also durchaus möglich, die Situation aus einer anderen Perspektive zu betrachten und jeweils von verschobenen Empfangszeitpunkten oder einer Empfangszeitpunkt-Feineinstellung zu sprechen. Dies wird im Folgenden und in den Ansprüchen sprachlich nicht differenziert. Insbesondere kann das Intervall zwischen Sende- und Empfangszeitpunkt als Ganzes jeweils zeitlich verschoben werden, ohne dass dies Auswirkungen auf das Messergebnis hat. Eine derartige gemeinsame Verschiebung von Sende- und Empfangszeitpunkt ist mit Sendezeitverzögerung folglich nicht gemeint, sie kann stets optional zusätzlich erfolgen. Ähnlich sind mit Begriffen wie Offset oder Sendezeitverzögerung Verschiebungen auf der Zeitachse sowohl in positiver wie in negativer Richtung umfasst.

Die Verteilung der Offsets ist bevorzugt unimodal, insbesondere gemäß einer Dreiecks-, Parabel- oder Gaussfunktion vorgegeben, wobei ein Speicher vorgesehen ist, in dem für die Sendezeit-Feineinstelleinheit eine Tabelle hinterlegt ist, welche für eine Vielzahl von Zeitinkrements eine zugehörige Offsetverteilung hält, insbesondere je eine Offsetverteilung für gleichmäßig verteilte Zeitinkrements. Derartige Verteilungen haben einen besonders ausgeprägten Schwerpunkt und damit hohe zeitliche Präzision. Dabei wird die Verteilung aus einigen Stützstellen, welche tatsächlichen Sendezeitpunkten entsprechen, und zugehörigen Counts gebildet, also Wiederholungen für gerade dieses Offset und damit letztlich Amplitudeinformationen. Die angegebenen Funktionen bilden dabei eine Hüllkurve über die Bins. Die Anzahl der Stützstellen sollte gemäß einem Kompromiss aus möglichst enger Verteilung und einer hinreichend genauen Abbildung des Schwerpunkts und der Hüllkurve gewählt werden, also beispielsweise 3 bis 11 Stützstellen oder besonders bevorzugt 5 bis 7. Dabei ist grundsätzlich der wohldefinierte Schwerpunkt wichtiger als die treue Wiedergabe der Hüllkurve, so dass Diskretisierungsfehler bei der Vorgabe der Verteilung bevorzugt zulasten der Form und nicht des Schwerpunkts berücksichtigt werden.

Besonders eine gaussförmige Verteilung ist vorteilhaft, da sie nicht nur einen gut definierten Schwerpunkt hat, sondern auch robust gegenüber Jitter ist. Im Gegenteil ist ein Jitter aufgrund von Schwankungen im Umgebungslicht oder Toleranzen der Elektronik sogar erwünscht. Damit werden die diskreten Stützstellen in der Verteilung ineinander verschmiert, somit bildet die Vielzahl von ausgesandten Lichtpulsen nicht nur eine diskrete Näherung an einen Gauss, sondern sogar einen nahezu kontinuierlichen Gauss. Nimmt man an, dass der Jitter weißem Rauschen entspricht, so wird der Gauss dadurch möglicherweise etwas verzerrt, behält aber seine wesentlichen Eigenschaften bei.

Die verwendete Tabelle ist genaugenommen eine Tabelle von Tabellen: Für jedes durch Verteilungen einstellbare Zeitinkrement ist eine eigene Tabelle hinterlegt, nämlich mit den zu den Stützstellen erforderlichen Counts, welche so die Verteilung angibt. Für jede einzelne dieser Verteilungen gilt das oben Gesagte, dass der wohldefinierte Schwerpunkt entsprechend dem Zeitinkrement wichtiger ist als die treue Abbildung der Hüllkurve, weil ein verschobener Schwerpunkt bereits einen prinzipbedingten Messfehler einführen würde. Mit Hilfe der Tabelle kann der Sendezeitpunkt beliebig um das Zeitinkrement verschoben werden. Dabei genügt es, wenn die Tabelle Einträge bis zu der nächstgröberen Periode hält, also bis zu den einstellbaren tatsächlichen Sendezeitpunkten, sie kann grundsätzlich aber auch mehr Einträge umfassen.

In vorteilhafter Weiterbildung ist eine Pegelbestimmungseinheit vorgesehen, welche dafür ausgebildet ist, die Fläche des in dem Histogramm akkumuliert aufgezeichneten Empfangssignals als Maß für den Pegel zu nutzen, insbesondere durch Bilden der Betragssumme über die Bins, nachdem zuvor von jedem Bin der Rauschpegel abgezogen wurde. Der Rauschpegel lässt sich beispielsweise als Mittelwert über alle Bins bestimmen. Die Betragssumme des Empfangssignals wird nicht notwendigerweise über das gesamte Histogramm gebildet, sondern auch nur über den Zeitbereich, in dem das Empfangssignal liegt. Dies ist das bessere Maß, da man sonst die rauschbedingten Schwankungen in die Pegelmessung einbezieht. Umgekehrt wird bevorzugt der Rauschpegel auch nicht über alle Bins gebildet, sondern über Bins außer dem Bereich des Empfangssignals, vorzugsweise im nicht optisch sichtbaren Bereich.

Die Auswertungseinheit ist bevorzugt für eine Entfernungskorrektur ausgebildet, welche eine remissionsabhängige Verschiebung aufgrund der Pegelmessung kompensiert. Die dafür erforderliche remissionsabhängige oder Schwarz-Weiss-Korrektur, also die Beziehung, welche zu jedem Pegel einen Korrekturfaktor für die Lichtlaufzeit angibt, kann vorab eingelernt und als Tabelle oder Korrekturfunktion hinterlegt werden. Die Pegelmessung lässt sich auch auswerten, um den Zustand der optischen Komponenten zu prüfen, beispielsweise Justage, Verschmutzungen oder die Sendelichtstärke.

Die Auswertungseinheit ist weiterhin bevorzugt für eine zeitliche Codierung ausgebildet, bei der die Sendezeitpunkte mit einem zusätzlichen Codierungsoffset beaufschlagt werden und dieses zur Auswertung wieder abgezogen wird, insbesondere durch randomisiertes oder determiniertes Mischen der Verteilung oder eine zusätzliche Schwerpunktsverschiebung. Derartige Codierungen dienen dazu, das ausgesandten Lichtsignal von Störlicht zu unterscheiden, wobei Störlicht auch ein später Reflex eines selbst ausgesandten Lichtpulses oder eines baugleichen Sensors sein kann. Durch gezieltes und in der Auswertung kompensierbares Springen auf der Zeitachse oder "Verwackeln" werden solche Störer verschmiert und heben sich nicht oder zumindest weniger stark aus dem Rauschpegel heraus. Alternativ oder zusätzlich kann noch die Signalform selbst codiert werden, also die Form eines jeden einzelnen Lichtsignals, um das eigene Lichtsignal beim Empfang wiederzuerkennen.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine sehr vereinfachte schematische Blockdarstellung eines erfindungsge- mäßen optoelektronischen entfernungsmessenden Sensors;
- Fig. 2: ein Blockschaltbild des Sensors gemäß Figur 1 mit Darstellung weiterer Elemente;
- Fig. 3: eine schematische Darstellung der Signale in unterschiedlichen Verarbei- tungsstadien zur Erläuterung des Auswertungsverfahrens;
- Fig. 4: eine Überblickdarstellung der einzelnen Verarbeitungsblöcke für die digitale Signalauswertung;
- Fig. 5: ein Blockschaltbild zur Erzeugung einer hochauflösenden Zeitbasis;
- Fig. 6: schematische Signalverläufe zur Erläuterung der Erzeugung der Zeitbasis;
- Fig. 7: eine schematische Darstellung der Sendemuster zur Auflösungserhöhung;
- Fig. 8: eine Darstellung gemäß Figur 7 zur Erläuterung der Erzeugung von hoch- auflösenden Zeitinkrements;
- Fig. 9: eine Darstellung der Zeitintervalle und des Beobachtungszeitpunkts, auf den der Empfang der Lichtsignale geregelt wird;
- Fig. 10: eine Darstellung analog Figur 3 zur weiteren Erläuterung der Regelung gemäß Figur 9;
- Fig. 11: eine schematische Darstellung zur Erläuterung eines übergeordneten Ü- berwachungsagenten auf das korrekte Regelzeitintervall, bei dem der Beo- bachtungszeitpunkt gewechselt wird;
- Fig. 12: eine Darstellung gemäß Figur 11 mit Beispielen für Störsignale, auf welche der Überwachungsagent nicht wechselt;
- Fig. 13: eine Darstellung eines Empfangssignals zur Erläuterung einer Pegelmes- sung;und
- Fig. 14: eine schematische Darstellung einer Sendemustercodierung zur Messbe- reichserweiterung und/oder der sicheren Zuordnung von Sende- zu Emp- fangssignal.

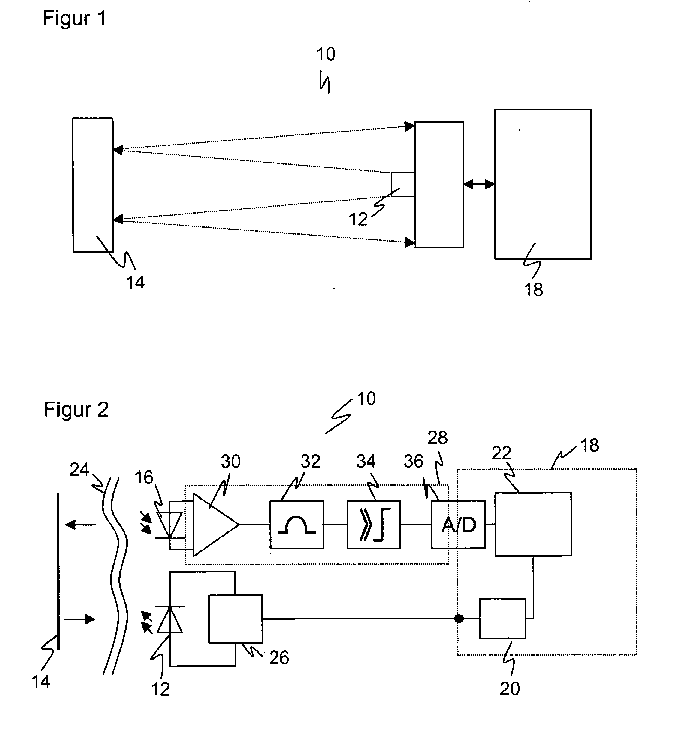

Figur 1 zeigt einen sehr vereinfacht dargestellten optoelektronischen Entfernungsmesser oder Sensor 10, der über einen Lichtsender 12 einen Lichtpuls zu einem Reflektor oder einem reflektierenden Zielobjekt 14 sendet. Der dort reflektierte oder remittierte Lichtstrahl kehrt zu einem Lichtempfänger 16 zurück, der den Lichtsender 12 umgibt. Weil sich der Lichtstrahl auf seinem Weg aufweitet, verdeckt der Lichtsender 12 nur einen kleinen und unerheblichen Teil des reflektierten Lichts. Natürlich kann man alternativ auch andere bekannte Lösungen einsetzen, wie Autokollimation etwa mit einem Strahlteiler und einer gemeinsamen Optik; oder Pupillenteilung, wo zwei getrennte Optiken vorgesehen sind und Lichtsender und Lichtempfänger nebeneinander angeordnet werden.

Lichtsender 12 und Lichtempfänger 16 werden von einer Steuerung 18 angesteuert und ausgewertet. Die Steuerung 18 veranlasst den Lichtsender 12, einzelne Lichtpulse zu einer bekannten Zeit auszusenden. Weiter unten wird detailliert erläutert, wie die erforderliche Sendezeitverzögerung erreicht wird. Die Steuerung 18 bestimmt den Empfangszeitpunkt des Lichtpulses in dem Lichtempfänger 16 in einer ebenfalls noch zu erläuternden Weise. Aus dem Empfangszeitpunkt errechnet sich mit dem bekannten Aussendezeitpunkt die Lichtlaufzeit, die wiederum über die Lichtgeschwindigkeit der Entfernung des Zielobjekts 14 entspricht.

Für den Sensor 10 sind zumindest zwei Modi möglich: In einem Modus wird die Lichtlaufzeit und damit die Entfernung absolut gemessen. In einem anderen Modus wird eine bestimmte Entfernung eingelernt, beispielsweise zu einem festen kooperativen Ziel, und überwacht, ob sich dessen Abstand ändert.

Der Sensor 10 kann ein optoelektronischer Taster oder Entfernungsmesser sein. Neben einer eigentlichen Entfernungsmessung, bei der ein Absolutwert für eine Entfernung zu einem Objekt 14 ermittelt wird, ist auch die Überwachung eines eingelernten Abstands, beispielsweise zu einem festen kooperativen Ziel 14, auf Änderungen des eingelernten Abstands denkbar. Eine weitere Ausführungsform ist eine Reflexionslichtschranke, also eine Lichtschranke mit einem Lichtsender und einem gegenüber angeordneten Reflektor, wobei eine Unterbrechung des dort reflektierten Strahls detektiert wird. Durch die Messung der Entfernung oder der Änderung der Entfernung dieses Reflektors kann überwacht werden, ob der Reflektor noch am erwarteten Ort steht. Alle genannten Sensoren können einen Entfernungswert ausgeben oder anzeigen oder auch als Schalter arbeiten, indem ein Schaltereignis bei Detektion eines Objekts in einer bestimmten Entfernung oder bei Abweichung von einer erwarteten Entfernung ausgelöst wird. Mehrere Sensoren 10 können kombiniert werden, etwa um ein entfernungsmessendes oder entfernungsüberwachendes Lichtgitter zu bilden. Auch mobile Systeme sind denkbar, bei denen der Sensor 10 beweglich montiert ist, oder scannende Systeme, bei denen der ausgesandte Lichtpuls mit einer Ablenkeinheit eine Überwachungslinie oder eine Überwachungsfläche überstreicht, wobei die Ablenkeinheit ein Drehspiegel oder ein Polygonspiegelrad sein kann.

Weitere Einzelheiten des Sensors 10 sind in Figur 2 gezeigt. Hier wie im Folgenden bezeichnen gleiche Bezugszeichen die gleichen Merkmale. Als Lichtsender ist hier beispielhaft eine Laserdiode 12 dargestellt. Es kommen beliebige Laserlichtquellen 14 in Frage, beispielsweise Kantenemitter oder VCELs (Vertical-Cavity Surface-Emitting Laser), und prinzipiell sind auch andere Lichtquellen wie LEDs geeignet, sofern sie zeitlich hinreichend scharfe Signale erzeugen können. Entsprechend ist der Empfänger als Photodiode 16 gezeigt, wobei auch der Einsatz einer PSD (positionsempfindliche Diode) oder einer Zeile beziehungsweise Matrix von Lichtempfangselementen denkbar ist, wie etwa einem CMOS-Chip, also allgemein jeder Empfänger, der ein Lichtsignal in ein elektrisches Signal umwandeln kann.

Die Steuerung ist in der beschriebenen erfindungsgemäßen Ausführungsform auf einem FPGA (Field Programmable Gate Array) 18 implementiert. Alternative digitale Bausteine wurden einleitend bereits nicht abschließend genannt. Die Steuerung 18 weist eine Sendezeitpunkts-Einstellungseinrichtung 20 und eine eigentliche Auswertungseinheit 22 auf. Die Anschlüsse des FPGA 18 sind differentiell ausgeführt, um die Signale störungsfreier übertragen zu können. Das Zielobjekt 14 ist für gewöhnlich im Maßstab der Figur 2 weiter entfernt, wie durch gebrochene Linien 24 angedeutet ist.

Der Sensor 10 hat einen Sendepfad, zu dem neben dem eigentlichen Lichtsender 16 noch ein Lasertreiber 26 und die Verzögerungseinrichtung 20 gehört, sowie einen Empfangspfad, zu dem die Photodiode 12 gehört, die über einen analogen Vorverarbeiter 28 das digitalisierte Empfangssignal der Auswertungseinheit 22 zuführt.

Der analoge Vorverarbeiter 28 bildet einen mehrstufigen Verarbeitungspfad. Dieser beginnt mit einem Verstärker 30, etwa einem Transimpedanzverstärker, der das Signal der Photodiode 16 annimmt und verstärkt. Ein nachgeschalteter Filter 32, der beispielsweise ein Bandpassfilter oder ein Differenzierer sein kann, wandelt das unipolare Lichtsignal in ein bipolares Signal um. Als nächste Vorverarbeitungsstufe ist ein Begrenzungsverstärker 34 vorgesehen, der die Amplitude so weit verstärkt und anschlieβend abschneidet, dass das Lichtpulssignal zu einem in die Sättigung getriebenen Rechteckpuls wird. Dieses Signal wird als letzte Vorverarbeitungsstufe einem A/D-Wandler 36 zugeführt, insbesondere einem Binarisierer, der die Amplitude nicht in einen digitalen Zahlenwert, sondern lediglich in einen Binärwert umwandelt. Der A/D-Wandler 36 ist bevorzugt kein eigener Baustein, sondern über die Eingänge des FPGA 18 mit einfachen vorgeschalteten analogen R- oder RC-Netzwerken realisiert.

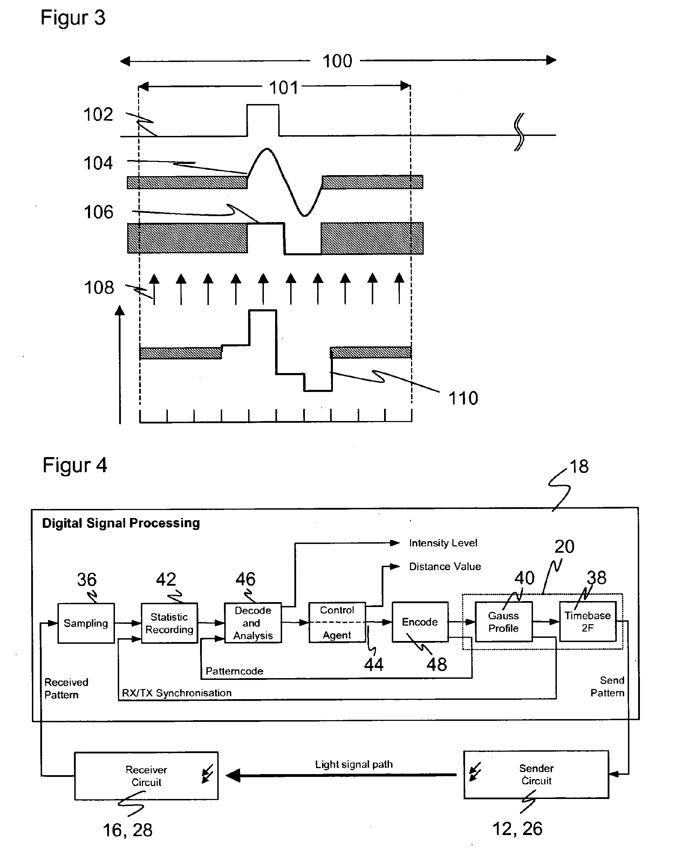

Der Signal- und Auswertungspfad in dem Sensor 10 durch die soeben beschriebenen Komponenten wird nunmehr mit Hilfe von Figur 3 beschrieben. Dabei ist bevorzugt eine statistische Auswertung einer Vielzahl von Einzelmessungen vorgesehen, weil die Signale der Einzelmessung viel zu stark verrauscht sind, um zuverlässige Empfangszeitpunkte bestimmen zu können.

Der Lichtsender 16 erzeugt in jeder Messperiode 100 jeweils einen Lichtpuls, der die Bestimmung eines präzisen Zeitpunkts ermöglicht. Wie weiter unten noch erläutert, unterscheidet die Steuerung 18 ein nur einen Teil der Messperiode umfassendes Regelzeitintervall 101, das beispielsweise einem Meter Messstrecke entspricht. Als Lichtsignal eignet sich ein Rechteckpuls, es sind aber auch andere Pulse, wie beispielsweise Gausspulse, multimodale Signale beispielsweise zur codierten Zuordnung jedes Signals und auch Stufen denkbar. All diese Signalformen werden im Weiteren nur noch als Lichtpuls bezeichnet.

Der Lichtpuls wird in dem Überwachungsbereich des Sensors 10 an dem Zielobjekt 14 reflektiert oder remittiert und dann in dem Lichtempfänger 12 in ein elektrisches Signal umgewandelt. Anschließend wird das elektrische Signal in dem Verstärker 30 verstärkt. Das entstehende verstärkte elektrische Signal 102 ist idealisiert dargestellt, unter realistischen Bedingungen wäre der empfangene Lichtpuls 102 kein sauberes Rechteck, sondern würde an den Flanken Transienten und insgesamt ein Rauschen zeigen.

Der verstärkte elektrisch empfangene Lichtpuls ist aufgrund der Natur des Lichtes immer ein unipolares Signal. In dem Filter 32 wird es zu einem bipolaren Signal 104 umgewandelt. Dies kann mit einem Bandpassfilter realisiert werden, der erzeugte Signalverlauf 104 entspricht aber zumindest näherungsweise der gedehnten Ableitung des verstärkten Signals 102. In der Figur 2 sind neben dem bipolaren Signal 104 graue Rechtecke dargestellt, die den Rauschpegel symbolisieren sollen. Der Rauschpegel kann in der Praxis die Amplitude des verstärkten Signals 102 übertreffen. Es ist weiterhin nur eine Sinusschwingung des bipolaren Signals 104 dargestellt. Nachschwingungen, also weitere Sinusperioden mit zunehmend gedämpfter Amplitude, sind der vereinfachten Darstellung halber weggelassen. Selbstverständlich ist auch nicht immer ein reiner Sinus, jedoch eine Kurve mit Maximum und Minimum zu erwarten.

In dem Begrenzungsverstärker 34 wird das bipolare Signal 104 so weit verstärkt und abgeschnitten, dass das eigentliche Signal zu einer Rechteckflanke 106 wird und der durch graue Rechtecke dargestellte Rauschpegel in seiner Amplitude über den gesamten Dynamikbereich gedehnt wird.

Die Rechteckflanke 106 wird in dem Binarisierer 36 mit einer Abtastrate von beispielsweise 2,5ns abgetastet. Diese Abtastrate ist in der Figur 3 durch Pfeile 108 symbolisiert. Die entstehende Bitfolge, bei den angegebenen Zahlenwerten je 1 Bit pro 2,5ns, wird in der Auswertungseinheit 22 verwendet, um ein Histogramm 110 zu bilden. Dafür ist für jedes Bin ein Akkumulator vorgesehen, der nur bei einem zugehörigen Bitwert "1" heraufgezählt wird. Die Abtastung ist, anders als dargestellt, nicht notwendig auf das Regelzeitintervall 101 beschränkt.

Bei idealen, unverrauschten Signalen würde in diesem Histogramm 110 nur dasjenige Bin gefüllt, über dem die Rechtflanke 106 liegt. Der von dem Begrenzungsverstärker 34 angehobene Rauschpegel füllt aber auch die übrigen Bins, und zwar wegen der Zufälligkeit des Rauschens im Erwartungswert etwa in jeder zweiten Messperiode 100.

Wird das soeben beschriebene Verfahren iteriert und das Histogramm 108 über k Messperioden 100 gebildet, so sind die Bins durch das Rauschen ungefähr mit dem Wert k/2 gefüllt, wobei statistische Schwankungen hinzukommen. Dieser Wert k/2 entspricht aufgrund der Binarisierung dem Signalwert Null. Daraus erhebt sich nach oben das durch den positiven Teil des bipolaren Signals 104 gebildete Maximum und nach unten das entsprechende Minimum heraus. Zusammen mit den nicht dargestellten Nachschwingungen zeigt das Histogramm in dem Zeitintervall des Empfangssignals einen charakteristischen Verlauf, dessen Signatur die Auswertungseinheit 22 verwendet, um den Empfangszeitpunkt zu bestimmen. Die statistische Auswertung einer Vielzahl von Einzelmessungen ermöglicht dies auch dann, wenn die Einzelmessung in einer Messperiode 100 wegen zu hoher Rauschanteile keine zuverlässige Entfernungsbestimmung zulässt.

Wegen der begrenzten Abtastrate, die mit 2,5ns beispielhaft angegeben ist, genügt es nicht, in dem Histogramm 110 direkt nach dem Empfangssignal zu suchen, da die zeitliche Auflösung zu gering wäre. Figur 4 zeigt eine Übersichtsdarstellung über das erfindungsgemäße Vorgehen, die zeitliche Auflösung weit über die Präzision eines etwa durch ein FPGA oder einen A/D-Wandler vorgegebenen Zeitrasters hinaus zu verbessern. Dabei sind in der Übersicht der Figur 4 eine Vielzahl ineinandergreifender Schritte gezeigt. In dieser Kombination wird die beste Gesamtperformance erreicht. Es ist jedoch nicht zwingend erforderlich, sämtliche der Schritte zugleich zu implementieren. Auch eine Teilauswahl erhöht bereits die Messgenauigkeit gegenüber herkömmlichen Systemen. Die einzelnen Schritte gemäß der Übersicht in Figur 4 werden anschließend mit weiteren Figuren näher erläutert.

Die Sendezeitpunkts-Einstellungseinrichtung 20 weist eine Zeitbasiseinheit 38 auf, welche mit einem auf zwei Frequenzen basierenden Verfahren eine hochauflösende Zeitbasis zur Verfügung stellt. Die Zeitbasis kann ausgenutzt werden, um das Aussenden von Lichtpulsen deutlich genauer zu verzögern als mit Vielfachen von 2,5ns, beispielsweise mit Vielfachen von 60,975ps.

Weiterhin weist die Sendezeitpunkts-Einstellungseinrichtung 20 eine Sendezeit-Feineinstelleinheit 40 auf, in der mittels einer Vielzahl von Einzelmessungen ein beispielsweise gaussförmiges Sendemuster gebildet wird, um eine effektiv wirkende Sendezeitverzögerung durch den Schwerpunkt des zugehörigen Empfangsmusters gegenüber den möglichen physikalischen Sendezeitpunkten theoretisch beliebig zu verfeinern. Die Zeitbasiseinheit 38 verändert also direkt die Auflösung, welche von der Sendezeit-Feineinstellungseinheit 40 indirekt über eine statistische Schwerpunktsverschiebung weiter verfeinert wird.

Die auf einem derart hochaufgelösten Zeitraster über die Messstrecke geführten Lichtpulse werden empfangen und in dem A/D-Wandler 36 digitalisiert. Anschließend erfolgt die zu Figur 3 erläuterte Histogrammauswertung in einer Histogrammeinheit 42.

Die eigentliche Entfernungsbestimmung erfolgt in einem Regler/Agenten 44 und basiert nicht auf einer Direktabtastung, sondern einem regelungstechnischen Trackingprinzip, um die generierte zeitliche Auflösung effektiv auszunutzen. Die Regelparameter müssen dabei einerseits so dimensioniert sein, dass geforderte Stabilitätskriterien erfüllt sind und der Sensor 10 gegenüber Störeinflüssen beispielsweise durch weitere Reflexe oder EMV robust bleibt. Dies zieht aber andererseits eine zu geringe Agilität eines klassischen Reglers nach sich, der nicht mehr schwellenlos auf einen echten Targetwechsel reagieren könnte. Deshalb sieht die Erfindung vor, den Regler ständig mittels eines Agenten im Hintergrund zu überwachen. Der Agent wertet regelmäßig den gesamten Arbeitsbereich des Sensors 10 aus und steuert den Regler bei Targetwechsel auf das richtige Regelzeitintervall 101, also den Zeitbereich der Zielposition.

In einer Pegelbestimmungseinheit 46 können die Histogramme 110 für eine hochauflösende Pegelmessung ausgewertet werden. Damit kann auf üblicherweise eingesetzte zusätzliche Analogelemente verzichtet werden. Darüber hinaus ist die Pegelbestimmung besonders in Kombination mit dem Regelungsprinzip sehr genau. Der Pegel kann ausgegeben, aber auch für eine Korrektur der Entfernungsmessung herangezogen werden.

Die Sendepulse können auf der Zeitachse in einer Codiereinheit 48 codiert ausgegeben werden, um eine eindeutige Zuordnung von Sendepuls zu Empfangspuls zu ermöglichen. Sie werden dann in einer Decodiereinheit 46 decodiert, die in Figur 4 zur Vereinfachung mit der Pegelbestimmungseinheit zusammengefasst wurde. Mit einer Sendemustercodierung lässt sich beispielsweise erreichen, Empfangspulse aus dem Hintergrund zu unterdrücken, also solche, die außerhalb des Messbereichs nach Ablauf der eigentlich zugeordneten Messperiode 100 empfangen werden. Eine andere Möglichkeit der Verwechslung, die durch Codierung verhindert wird, sind Lichtpulse von baugleichen Systemen. Dabei wird das gaussförmige Sendemuster nicht in seiner natürlichen, sondern in einer randomisierten Reihenfolge gesendet und empfangen. Die Decodiereinheit 46 kennt den Randomisierungsschlüssel und kann damit rückcodieren. Auf dem Lichtsignalpfad können so gleichzeitig mehrere Codesignaturen unterwegs sein, weil die verschiedenen Streckenabschnitte durch die Codierung gekennzeichnet und damit eindeutig sind.

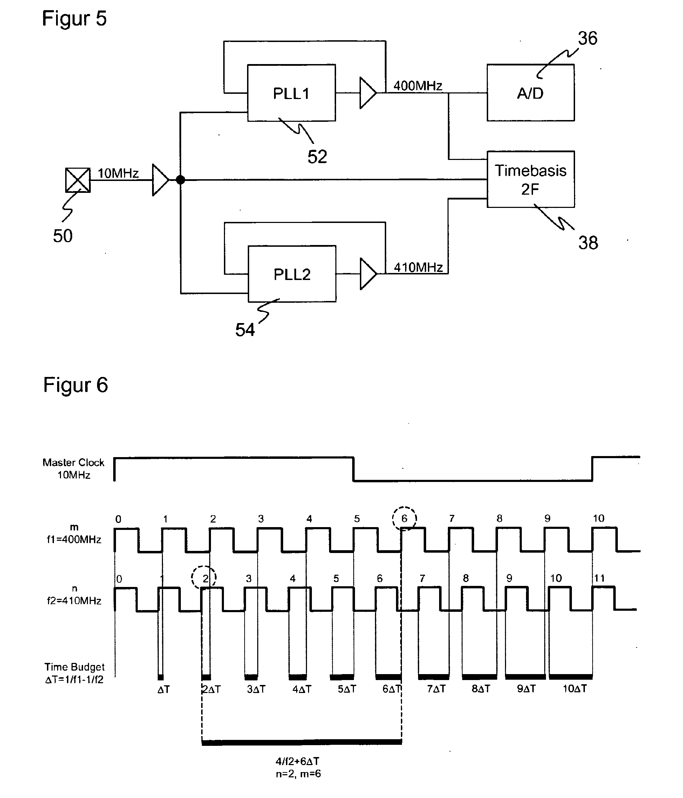

Anhand der Figuren 5 und 6 wird nun das Verfahren näher erläutert, mit dem die Zeitbasiseinheit 30 Zeitinkrements unabhängig von der Abtastrate von 2,5ns, beispielsweise in einem Zeitraster von 60,975ps zur Verfügung stellt.

Aus einem Mastertakt 50 von 10 MHz wird in einer ersten PLL 52 (Phase-locked Loop) und einer zweiten PLL 54 ein geteilter Takt als Vielfaches des Mastertakts 50 von f1=400 MHz bzw. f2=410 MHz erzeugt. Die Zeitbasiseinheit 38 erhält die beiden Frequenzen der PLLs 52, 54 sowie zur Synchronisation den Mastertakt 50 selbst. Die Frequenzen werden in der Zeitbasiseinheit 38 so verschaltet, dass ihre Phasenablage zur reproduzierbaren Erzeugung von Zeitinkrementen genutzt werden kann. Die Frequenz von 400 MHz der ersten PLL 52 dient zugleich als Abtastrate für den A/D-Wandler 36. Wie in Figur 6 zu sehen ist, laufen die Perioden der beiden unterschiedlichen Frequenzen 400 MHz und 410 MHz zunehmend auseinander und treffen sich nach einer Periode des Mastertakts 50 von 100ns wieder. Zu diesem Zeitpunkt erfolgt jeweils eine Synchronisation auf die theoretisch zeitgleiche steigende oder fallende Flanke, damit ein etwaiges Auseinanderlaufen der PLLs 52, 54 und des Mastertakts 50 ausgeglichen wird. Figur 6 ist vereinfacht und zeigt nur 10 bzw. 11 Perioden statt der eigentlich erforderlichen 40 bzw. 41 Perioden.

Die PLLs 52, 54 werden bevorzugt von dem FPGA 18 zur Verfügung gestellt. Die beiden Frequenzen können aber auch anders als mittels PLLs erzeugt werden. Selbstverständlich sind eine von 10 MHz abweichende Masterfrequenz und andere als die beispielhaften Frequenzen f1=400 MHz und f2=410 MHz von der Erfindung umfasst, wobei die Wahl einen Ausgleich zwischen Stabilität der erzeugten abgeleiteten Frequenz und einer möglichst kurzen Differenzperiode finden muss. Zeitraster im Bereich von Pikosekunden und darunter sind durch diese Wahl zumindest prinzipiell erreichbar.

Die Perioden der abgeleiteten Frequenzen f1 und f2 werden in durch diese Frequenzen getriggerten Schieberegistern durchgezählt, so dass der Zeitbasiseinheit 38 wie in Figur 6 dargestellt bekannt ist, zu welcher Periode eine Flanke gehört. Zwischen der jeweils i-ten Periode von f1 und f2 bildet sich ein zunehmender Phasenunterschied aus, der nach einer vollen Periode des Mastertakts 50 gerade so groß wird, dass die 41te Periode von f2 zeitgleich mit der 40ten Periode von f1 zu liegen kommt. Diese Unterschiede stehen in Form von Zeitinkrements oder Zeitbudgets als Vielfache der Differenzperiode ΔT = 1/f1-1/f2 = 60,975ps zur Verfügung. Dabei wird noch einmal auf die zur vereinfachten Darstellung abweichenden Zahlen 10 und 11 der Figur 6 hingewiesen.

Die Zeitbasiseinheit 38 wählt nun jeweils ein Pärchen aus n-ter Periode der Frequenz f2 und m-ter Periode der Frequenz f1 aus, um beliebige Vielfache der Differenzperiode zu erzeugen. Jedes Pärchen hat relativ zum Mastertakt 50 eine feste Position. Beispielsweise entspricht n=2 und m=6 einem Zeitintervall von 4/f2+6ΔT, wobei 1/f2=41ΔT gilt. Volle Perioden der Mastertakts werden dabei hinzugezählt, um die Messperiode 100 von 1µs zu füllen, beispielsweise durch eine übergeordnete, das Timing maskierende Steuereinheit, welche am Mastertakt festgemacht ist. Dabei werden mit jeder Synchronisation nach 100ns die Zähler zurückgesetzt, so dass die Nummerierung der Pärchen neu beginnt. Sofern die Perioden von f1 und f2 über den Synchronisationszeitpunkt nach 100ns weitergezählt werden, können alternativ auch die Pärchen unmittelbar Zeitintervalle länger als 100ns festlegen. Um die Pärchen definiert auskoppeln zu können, sollten die beiden abgeleiteten Frequenzen f1 und f2 eine starre Kopplung zum Mastertakt haben, wie dies durch PLLs gegeben ist.

Aufgrund der beiden abgeleiteten Frequenzen f1 und f2 steht somit eine Zeitbasis zur Verfügung, welche wesentlich feiner ist als das Abtastraster. Damit kann entweder der tatsächliche Sendezeitpunkt gegenüber einer Referenzzeit um Vielfache der Differenzperiode verzögert werden, oder das eine Element des Pärchens definiert den Sendezeitpunkt, das andere den Zeitpunkt zum Start der statistischen Aufzeichnung des Empfangsmusters in der Histogrammeinheit 42. Damit besteht ein zeitlicher Versatz zwischen Sendezeitpunkt und Empfangszeitpunkt, der von dem Abtastraster mit den langsamen 2,5ns unabhängig ist. Die Zeitbasiseinheit 38 kann vollständig innerhalb des FPGA 18 arbeiten und ist deshalb einfach implementierbar und wenig störanfällig.

Das durch die Zeitbasiseinheit 38 verfügbare Zeitinkrement ist weiterhin diskret und durch die Wahl der Frequenzen bestimmt. Die Genauigkeit einer Einzelmessung innerhalb einer Messperiode 100 wird daher zunächst durch die Differenzperiode der gewählten Frequenzen begrenzt.

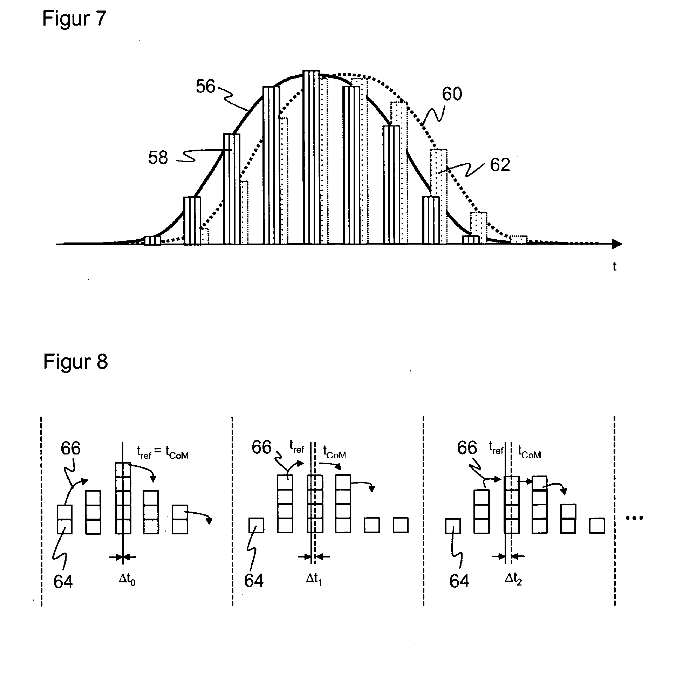

Die Figuren 7 und 8 veranschaulichen ein Verfahren zur zeitlichen Auflösungserhöhung für eine Vielzahl von Einzelmessungen mittels der Sendezeit-Feineinstellungseinrichtung 40. Dabei wird in den Wiederholungen in weiteren Messperioden 100 der Sendezeitpunkt anhand einer Verteilung variiert. Gemäß einer Hüllkurve 56 werden an den diskreten Stützstellen 58, welche durch die physikalisch möglichen diskreten Sendezeitpunkte festgelegt sind, die zugehörigen Häufigkeiten vorgegeben. Der Schwerpunkt dieser Verteilung bestimmt den effektiv wirksamen Sendezeitpunkt, der für die gesamte statistische Auswertung für das Histogramm 110 nach k Messperioden 100 maßgeblich ist.

Dieser Schwerpunkt ist nun aber nicht an die diskreten physikalischen Sendezeitpunkte oder Stützstellen 58 selbst gebunden. Durch Wahl einer anderen Verteilung 60, also anderen Häufigkeiten 62 an denselben diskreten Stützstellen, kann der effektiv wirksame Sendezeitpunkt mit einer theoretisch beliebig steigerbaren Genauigkeit auch zwischen den diskreten Stützstellen 58 gewählt werden. In Figur 7 sind die gestreift dargestellten Stützstellen 58 der einen Verteilung 56 leicht versetzt gegenüber den gepunktet dargestellten Stützstellen 62 der anderen Verteilung 60 gezeigt. Dies dient allein der Veranschaulichung, da ja die Stützstellen jeweils an dieselben diskreten physikalisch möglichen Sendezeitpunkte gebunden sind. Man kann das Stützstellengitter als mögliche Offsets gegenüber einem Referenzzeitpunkt und damit die Häufigkeiten als Offsetverteilung auffassen.

Figur 8 veranschaulicht, wie auf diese Weise feine Zeitinkrements definiert werden können. Im linken Drittel der Figur 8 ist die Ausgangslage für ein Zeitinkrement Δt₀=0 dargestellt, bei welcher die als Blöcke 64 gezeigten Einzelmessungen eine Verteilung bilden, deren Schwerpunktszeit t_{CoM} gerade mit der Referenzzeit t_{ref} zusammenfällt. Genaugenommen ist es nicht notwendig, hier überhaupt schon mit einer Verteilung zu arbeiten, da die Schwerpunktszeit t_{CoM} über das diskrete Zeitraster auch unmittelbar erreichbar wäre.

Für das nächste Zeitinkrement wird nun eine Verteilung gewählt, deren Schwerpunkt ein wenig verschoben ist, wie dies im mittleren Drittel und rechten Drittel der Figur 8 gezeigt ist. Dazu werden einige Einzelmessungen mit anderen Offsets durchgeführt. Beispielsweise werden jeweils wie mit Pfeilen 66 angedeutet, drei Einzelmessungen nach rechts verschoben. Es ist selbstverständlich denkbar, eine andere Anzahl als drei zu wählen, wobei nur eine verschobene Einzelmessung das geringst mögliche Zeitinkrement festlegt. Wird die Anzahl von Schritt zu Schritt variiert, so ist das entstehende Zeitgitter unregelmäßig.

Analog kann eine Vielzahl von Verteilungen angegeben werden, bei der sich jeweils die Schwerpunktszeit t_{CoM} zunehmend um Δt₁, Δt₂, ... gegenüber der Referenzzeit t_{ref} verschiebt. Mit einer Tabelle solcher Verteilungen, die das Intervall zwischen zwei Stützstellen füllt, ist damit das diskrete Zeitraster der Stützstellen durch die Verteilungen und zugehörigen Schwerpunktszeiten t_{CoM} verfeinert. Die Sendezeit-Feineinstellungseinheit 40 kann auf diese Tabelle zugreifen, um ein Sendemuster mit einem gewünschten Zeitinkrement auszugeben und damit einen angestrebten oder effektiv wirksamen Sendezeitpunkt unabhängig von den diskreten Stützstellen zu erreichen.

Die Verteilung, die durch die Hüllkurve 56, 60 festgelegt wird, sollte in der Nähe des Schwerpunkts mehr Masse haben. Daher sind unimodale Verteilungen, beispielsweise Dreiecke, Parabeln oder eine Gausskurve bevorzugt, die auch jeweils eine geringe Standardabweichung haben, damit die Messbasis nicht zu breit wird. Dafür genügen schon wenige Stützstellen. Andererseits sollte die Flanke nicht zu steil abfallen, weshalb ein Gaussprofil bevorzugt ist.

Ein gewisses Rauschen im System kommt dem Verfahren hierbei sogar zugute, da dann die Stützstellen quasi ineinander verschmiert werden und eine glattere Annäherung an die Hüllkurve 56, 60 bilden. Ein völlig rauschfreies System würde Artefakte der diskreten Stützstellen im Empfangsmuster erhalten. Da im allgemeinen Störungen näherungsweise zu gaussischem Rauschen führen, ist erneut eine Gaussverteilung für die Hüllkurve 56, 60 bevorzugt.

Die erreichbare Auflösungserhöhung hängt letztlich nur von der Zahl der Einzelmessungen k ab, welche in die Bildung des Histogramms 110 einfließen. Jede zusätzliche Messung schafft weitere Möglichkeiten, wie in Figur 8 illustriert zusätzliche Zeitinkrements zu definieren. Bei einigen hundert Wiederholungen beispielsweise liegt die Ansprechzeit bis zur Verfügbarkeit eines Entfernungsmesswerts immer noch bei einigen hundert Messperioden 100, also mit den Zahlenwerten der Figur 3 bei einigen hundert µs. Damit lässt sich bereits eine Auflösungserhöhung um etwa zwei Größenordnungen erreichen. Ist das diskrete Zeitraster der Stützstellen durch die Zeitbasiseinheit 38 beispielsweise mit 60,975 ps festgelegt, so wird damit eine Subpikosekundenauflösung ermöglicht.

Trotz der beiden zuvor vorgestellten Möglichkeiten zur Verfeinerung des diskreten Zeitrasters ist weiterhin die Auflösung des Histogramms 110 in sich durch die Abtastrate des A/D-Wandlers 36 begrenzt. Um nun von der Auslösungserhöhung voll profitieren zu können, wird erfindungsgemäß nicht versucht, den Empfangszeitpunkt hochgenau zu bestimmen, sondern er wird vielmehr von vorneherein als Beobachtungszeitpunkt festgelegt und anschließend eine Sendezeitverzögerung so lange eingeregelt, bis der Empfangszeitpunkt mit diesem Beobachtungszeitpunkt übereinstimmt.

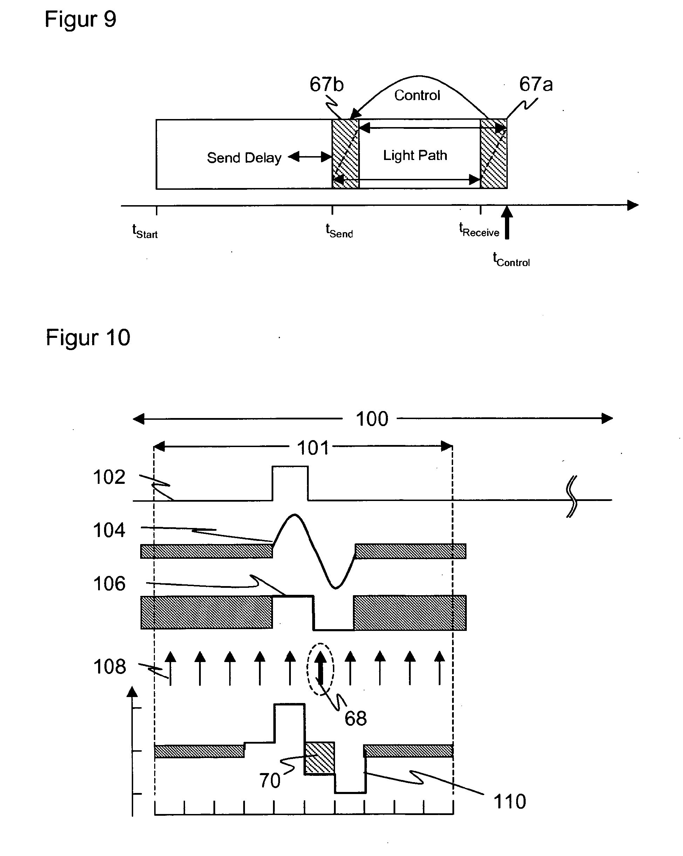

Diese Regelung veranschaulichen die Figuren 9 und 10. Der Beobachtungszeitpunkt t_{Control} wird vorab auf einem Punkt des Abtastgitters irgendwo innerhalb der Messperiode 100 so gewählt, dass er hinter der maximal zu messenden Lichtlaufzeit liegt, beispielsweise in der Mitte der Messperiode 100 bei 0,5µs oder ca. 75 Metern. Gegenüber einem gemeinsamen Zeitbezug t_{Start} wird der Lichtpuls mit Hilfe der Zeitbasiseinheit 38 und/oder der Sendezeit-Feineinstellungseinheit 40 um eine Sendezeitverzögerung verzögert, ehe zu einem Zeitpunkt t_{Send} der Sendepuls tatsächlich ausgesandt wird. Nach der Lichtlaufzeit, welche die eigentliche Messgröße ist, wird der Lichtpuls zu einem Zeitpunkt t_{Receive} wieder empfangen. Aufgabe der Regelung ist es, die Sendezeitverzögerung in einer Feedbackschlaufe so auszuregeln, dass stets t_{Receive} mit t_{Control} zusammenfällt, wie durch Umgruppieren des schraffierten Blocks 67a, b dargestellt.

Dann lässt sich die Lichtlaufzeit durch einfache Subtraktion berechnen. Das Zeitintervall t_{Control}-t_{Start} ist eine vorab gewählte bekannte Konstante, welche sich im eingeschwungenen Zustand genau um die Sendezeitverzögerung von der Lichtlaufzeit unterscheidet. Weitere konstante Anteile, etwa Signallaufzeiten in der Elektronik, können durch Kalibrierung eliminiert oder bei der Berechnung berücksichtigt werden. Für diese Anteile ist möglicherweise auch eine Temperaturkompensation erforderlich.

Für das Feedback muss der Regler hochgenau erkennen können, ob der Empfangszeitpunkt t_{Receive} mit dem Beobachtungszeitpunkt t_{Control} übereinstimmt. Dies illustriert Figur 10, welche in weiten Teilen mit Figur 3 übereinstimmt. Der Beobachtungszeitpunkt ist durch einen fettgedruckten Pfeil markiert. Als Übergangsbedingung, welche den Empfangszeitpunkt festlegt, wird der Nulldurchgang von erstem Maximum auf erstes Minimum des als Histogramm 110 aufgezeichneten Empfangssignals überwacht. Selbstverständlich können auch andere Charakteristika ausgewertet werden, aber der erste Nulldurchgang ist der ausgeprägteste und im Gegensatz zu den Extrema selbst weitgehend pegelunabhängig.

Das schraffierte Rechteck 70 der Figur 10 deutet die Abweichung entsprechend den schraffierten Rechtecken 67a, 67b der Figur 9 von der idealen Übergangslage an. Dies ist also ein Maß für die Regelabweichung und Grundlage für die Berechnung der notwendigen Anpassung der Sendezeitverzögerung. Liegt der Signalübergang t_{Receive} im Umfeld des Beobachtungszeitpunkts t_{Control}, kann diese Regelabweichung zumindest im idealen System durch Nachführen der Sendezeitverzögerung auf Null ausgeregelt werden.

Die Regelung ist in dem FPGA digital implementiert und hat damit Zugriff auf das Histogramm 110. Das Regelverfahren an sich kann jegliche bekannte Variante umfassen, beispielsweise Kalman-basierte Regelung, oder der Regler ist ein Pl- oder PID-Regler.

Der Regler arbeitet bevorzugt nicht über die gesamte Messperiode 100, sondern nur innerhalb eines Regelzeitintervalls 101, und es ist zur Vermeidung von Fehlregelungen günstig, wenn dies klein genug ist, um nicht mehrere potentielle Targets 14 zu umfassen. Liegt der Signalübergang t_{Receive} nicht in diesem Regelzeitintervall 101, so kann der Regler die Regelabweichung 70 nicht bestimmen. Daher ist ein übergeordneter Agent vorgesehen, der jeweils das Histogramm 110 über den gesamten Messbereich nach potentiellen Zielen 14 absucht. Der Agent ist entweder ein eigener Prozess oder zumindest konzeptionell von der Regelung getrennt, welche ihn dann periodisch aufruft, und somit der Regelung übergeordnet. Auch wenn man das Regelzeitintervall 101 so breit wie die Messperiode 100 wählt, kann der Regler selbst einen Targetwechsel nicht ohne Weiteres erkennen, da die Gefahr besteht, dass er in lokalen Extrema konvergieren und diese selbständig nicht verlassen würde.

Der Agent erkennt das Empfangssignal bevorzugt nicht anhand eines kompletten Mustervergleichs, da dies zu rauschempfindlich wäre. Stattdessen sucht er nach einer Signatur, die beispielsweise durch den alternierenden regelmäßigen Übergang von positiver zu negativer Maximalamplitude und umgekehrt gegeben sein kann. Die Signatur kann höheren Anforderungen entsprechen, je mehr solche Vorzeichenwechsel überwacht werden, und es ist denkbar, weitere Kriterien wie Einhaltung des logarithmischen Abfalls der Absolutwerte zu fordern. Diese beispielhaften Signaturen gelten für eine einfache Schwingung mit positivem und negativem Signalanteil, die aus einem einfachen Sendepuls entsteht. Es sind komplexere Sendesignale denkbar, um das System gegen Fremdstörer oder baugleiche System zu härten, und entsprechend angepasst ist dann auch die Signatur zu wählen.

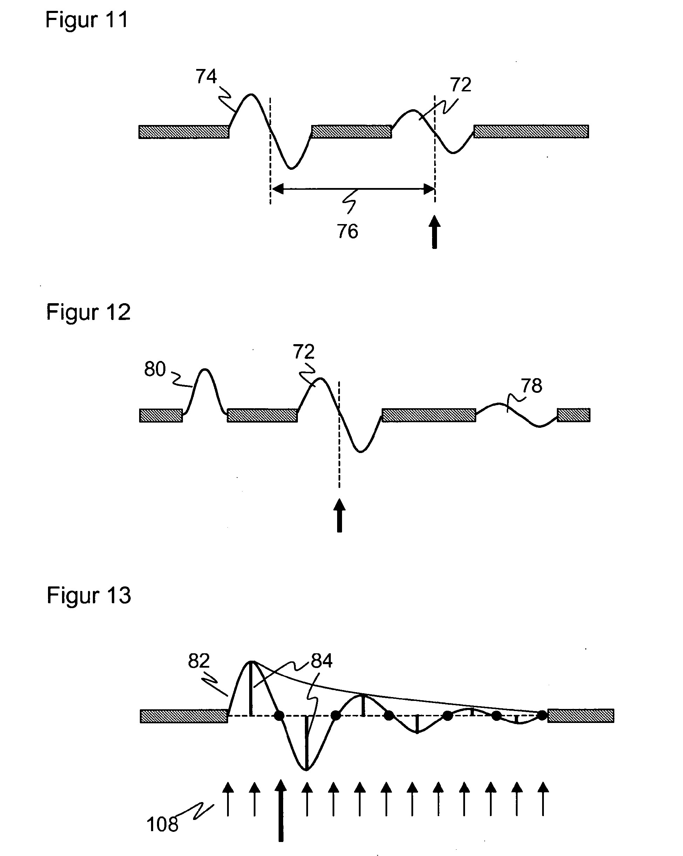

Figur 11 zeigt ein Beispiel für einen Targetwechsel. Das Regelzeitintervall 101 ist zunächst um ein Signal 72 gewählt, und der Regler hat den Beobachtungszeitpunkt auf dessen ersten Nulldurchgang ausgeregelt. Der übergeordnete Agent hat zwischenzeitlich aber ein ausgeprägteres Signal 74 aufgefunden. Um den Targetwechsel zu vollziehen, berechnet der Agent eine Zeitdifferenz 76 und setzt den Regler auf das neue Signal 74, indem das Regelzeitintervall 101 verschoben wird, also die Sendezeitverzögerung um die Zeitdifferenz 76 angepasst wird. Dabei muss der Agent keineswegs wie in der Figur 11 gezeigt die genaue Zeitdifferenz 76 berechnen, sondern es genügt, wenn das Regelzeitintervall 101 grob um das Signal 74 herum gewählt ist, so dass der Regler sich auf den exakten neuen Empfangszeitpunkt einregeln kann.

Für einen solchen Positions- oder Targetwechsel sind mehrere Bedingungen zu erfüllen. Zunächst wird geprüft, wo sich aktuell Signale mit der geforderten Signatur befinden. Dabei können schon einfache Schwellbewertungen vorfiltern. Der Rauschpegel, der im Idealfall bei k/2 liegt, wird durch Mittelwertbildung über das Histogramm 110 oder Teilbereiche davon berücksichtigt. Anschließend werden die Maximalamplituden derart aufgefundener potentieller Targets verglichen. Befindet sich ein potentielles Target mit größerer Amplitude außerhalb des aktuellen Regelzeitintervalls, so stellt dieses potentielle Target aus Sicht des Agenten das eigentliche aktuelle Target 14 dar. Damit aber singuläre Ereignisse oder Fehlinterpretationen des Agenten nicht zu unnötigen Sprüngen führen, zeichnet der Agent eine Historie der potentiellen Targets mit einer definierten Verfallszeit auf, beispielsweise in einer Queue. Erst wenn sich in dieser Historie ein neues Target statistisch signifikant häuft, nimmt der Agent tatsächlich einen Targetwechsel vor, beispielsweise wenn ein bestimmtes Target in 5 von 8 Fällen innerhalb der Historie ausgewählt würde. Auf diese Weise kann das System schwellenlos zu einer neuen Position wechseln, erlaubt damit Messungen bis zu sehr niedrigen Signalpegeln und ist dennoch robust gegenüber Störungen.

Figur 12 zeigt zwei Fälle von potentiellen Targets, die mindestens einem der genannten Kriterien nicht genügen und die deshalb auch keinen Targetwechsel auslösen. Neben dem Signal 72 des aktuellen Targets 14 ist jeweils ein weiteres potentielles Target durch Signale 78 und 80 gegeben. Das Signal 78 erfüllt auch die Signatur, hat aber eine kleinere Amplitude und wird deshalb nicht ausgewählt. Dabei kann die Amplitude noch entfernungskorrigiert werden. Das Signal 80 erfüllt bereits die Signatur nicht und wird deshalb unmittelbar als Störung erkannt.

Das Empfangssignal 104 beziehungsweise das Histogramm 110 enthält zusätzlich zu der Entfernungsinformation über die zeitliche Lage auch eine Pegelinformation über die Fläche unter dem Signal. Bei linearer Betrachtung ist der Pegel proportional zur Betragsfläche unter der Schwingung. Ein Pegelmesswert ist also über eine weitere Auswertung auf einfache Weise verfügbar. Figur 13 zeigt den Verlauf eines Empfangssignals 82 samt den Nachschwingungen, die in den übrigen Figuren zur Vereinfachung weggelassen sind und mit denen das Empfangssignal 82 logarithmisch abklingt. Wie in zahlreichen anderen Figuren deutet ein fettgedruckter Pfeil innerhalb des Abtastrasters 108 den Beobachtungszeitpunkt an, auf den der erste Nulldurchgang des Empfangssignals 82 geregelt ist. Die aufsummierten Signalamplituden 84 des Empfangssignals an Abtastpunkten 108 sind ein Maß für den Pegel.

Da die Lage des Empfangssignals 82 so ausgeregelt ist, dass der Nulldurchgang über einem Abtastpunkt liegt und weiterhin der Lichtpuls gerade eine Länge von 5ns, also einem Vielfachen der Abtastrate hat, liegen auch die weiteren Nulldurchgänge gerade über Abtastpunkten. Diese Fixierung des Histogramms 108 führt dazu, dass trotz der geringen Abtastrate eine gute Pegelinformation abgeleitet werden kann. Die Nulldurchgänge selbst tragen dann nämlich nichts bei, und da die Extrema jeweils mittig und damit auch auf einem Abtastpunkt liegen, fließt nur eine besonders aussagekräftige Amplitudeninformation in die Pegelmessung ein.

Wird der Empfangspuls 102 in der analogen Vorverarbeitung 28 so geformt, dass er ein schwach resonantes Verhalten zeigt, und wird darüber hinaus dem Filter 32 ein begrenzender Verstärker 34 nachgeschaltet, erhöht sich damit der Dynamikbereich einer Pegelmessung erheblich.

Die Pegelmessung ist nicht nur eine mögliche Ausgabegröße, sondern die Pegelinformation kann auch zur Korrektur einer pegelabhängigen Distanzablage genutzt werden. Dieser unter der Bezeichnung Schwarz-Weiß-Verschiebung bekannte Effekt führt dazu, dass die bestimmte Empfangszeit eine Abhängigkeit von der Intensität zeigt. Lernt man diese Abhängigkeit anfangs ein oder berücksichtigt sie in einer Korrekturrechnung, so kann die ermittelte Entfernung kompensiert werden und über einen weiten Intensitätsbereich vom Pegel unabhängig gemacht werden.

Die Pegelinformation kann weiterhin auch zur Justage der optischen Komponenten des Systems verwendet werden. So wird beispielsweise eine Verschmutzung oder Dejustierung erkannt, oder die Leistung des Lichtsenders 12 kann angepasst werden.

Es ist denkbar, dass der Sensor 10 in dem Histogramm 110 Störsignale aufakkumuliert, die dann zu Fehlmessungen führen. Hierzu kommen besonders Empfangssignale zu eigenen Sendepulsen in Frage, die jenseits des Messbereichs reflektiert werden, oder auch baugleiche Systeme, deren Lichtpulse empfangen werden. Deshalb ist gewünscht, Empfangssignale einem bestimmten selbst ausgesandten Sendemuster zuordnen zu können. Dazu dienen der Codierer 46 und der Decodierer 48, welche zusätzliche kompensierbare Verschiebungen auf der Zeitachse erzeugen und wieder auflösen. Derartige zeitliche Verschiebungen haben auch den Effekt, dass zeitlich konstant liegende Störer durch die Mittelung verschmiert werden, weil sie wegen der zeitlichen Codierung den festen Zeitbezug verlieren und jeweils in einem anderen Bin aufgezeichnet werden.

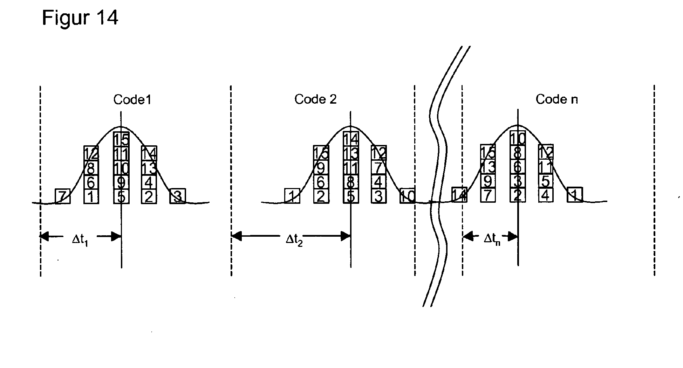

Besonders zwei Arten zeitlicher Codierung kommen in Betracht, die in Figur 14 illustriert sind. In jeder Messperiode 100 wird zum einen die Schwerpunktslage Δt₁ ... Δtₙ verschoben. Nur das eigentliche Messempfangssignal folgt dieser willkürlichen und schnellen Verschiebung der Schwerpunktslage, so dass Störer unterschieden werden können oder sich direkt ausmitteln.

Für eine Messbereichserweiterung oder eine systematische Störung etwa durch Mehrfachreflexe oder ein baugleiches System genügt die Schwerpunktsverschiebung nicht unbedingt. Deshalb kann alternativ oder kumulativ die Reihenfolge variiert werden, mit der das Gaussprofil in der Sendezeit-Feineinstellungseinheit 40 erzeugt wird. Für die Erzeugung des Histogramms 110 ist diese Reihenfolge belanglos, da nur aufakkumuliert wird. Dieser Freiheitsgrad wird ausgenutzt, um mit jedem Code 1 ... n eine andere Reihenfolge zu wählen, wie dies in Figur 14 beispielhaft mit den nummerierten Sendepulsen 86 dargestellt ist. Dadurch ist insbesondere möglich, den Messbereich auf Vielfache der Messperiode 100 zu erweitern, da über die Codierung eindeutig ist, zu welchem Teilbereich ein empfangenes Sendemuster gehört.

Die zeitlichen Variationen können randomisiert oder deterministisch sein. Randomisierung hat den Vorteil, Unterschiede zu baugleichen Systemen zu schaffen. Selbstverständlich muss auch bei randomisierten Verschiebungen der Decodierer 46 die Offsetinformationen bekommen, um sie kompensieren zu können.

Die einzelnen Elemente der Übersichtsfigur 4 sind damit detailliert erläutert. Obwohl der Sensor 10 derart in seiner Gesamtheit beschrieben wurde, sind einzelne Merkmalsgruppen auch unabhängig voneinander sinnvoll nutzbar. So verfeinert beispielsweise das gaussförmige Sendemuster die durch die beiden Frequenzen erzeugten tatsächlichen Sendezeitpunkte weiter. Beide Schritte erreichen aber auch für sich bereits eine Auflösungserhöhung. Demnach lassen sich diese und andere Merkmalsgruppen auch anders insbesondere über Figuren hinweg kombinieren, als in den konkreten Ausführungsformen beschrieben.

## Patentansprüche

1. Optoelektronischer Sensor (10) zur Messung von Entfernungen nach dem Lichtlaufzeitprinzip mit einem Lichtsender (12) zum Aussenden eines Lichtsignals, einem Lichtempfänger (16) zum Empfangen eines remittierten oder reflektierten Empfangssignals sowie einer Auswertungseinheit (18), welche dafür ausgebildet ist, durch systematische Wahl einer Sendeverzögerungszeit für das Aussenden des Lichtsignals zu einem Beobachtungszeitpunkt eine Übergangsbedingung für das Empfangssignal zu erfüllen und aus der hierfür erforderlichen Sendeverzögerungszeit die Lichtlaufzeit zu berechnen,
**dadurch gekennzeichnet,**
**dass** ein Regler (44) vorgesehen ist, der dafür ausgebildet ist zu erkennen, ob ein Empfangszeitpunkt des Empfangsignals mit dem Beobachtungszeitpunkt übereinstimmt, und die Sendeverzögerungszeit in einer Feedbackschlaufe so nachzuführen, dass die Übergangsbedingung in dem Beobachtungszeitpunkt erfüllt ist.

2. Sensor (10) nach Anspruch 1,
wobei die Auswertungseinheit (18) dafür ausgebildet ist, in jeweils einer Messperiode (100) zu einem von dem Regler (44) über die Sendeverzögerungszeit vorgegebenen Sendezeitpunkt das Aussenden eines Lichtsignals auszulösen und das empfangene Lichtsignal abzutasten sowie über eine Vielzahl von Messperioden (100) ein Histogramm (110) von derart empfangenen Lichtsignalen zu akkumulieren, um aus dem Histogramm (110) den Empfangszeitpunkt und daraus die Lichtlaufzeit zu bestimmen, und wobei die Überprüfung der Übergangsbedingung für das Empfangssignal in dem Histogramm (110) erfolgt.

3. Sensor (10) nach Anspruch 1 oder 2,
wobei in dem Empfangspfad zwischen Lichtempfänger (16) und Auswertungseinheit (18) ein Filterelement (32) vorgesehen ist, um das unipolare Empfangssignal in ein bipolares Signal umzuwandeln, und wobei die Übergangsbedingung insbesondere einen Nulldurchgang von erstem Maximum auf erstes Minimum des bipolaren Signals umfasst.

4. Sensor (10) nach einem der vorhergehenden Ansprüche,
wobei ein Regelzeitintervall (101), innerhalb dessen der Regler (44) die Übergangsbedingung prüfen und die Sendeverzögerung nachführen kann, nur einem Teilbereich eines Messbereichs des Sensors (10) entspricht, und wobei eine Positionswechsel-Überwachungseinheit (44) vorgesehen ist, um periodisch zu überprüfen, zu welchem Zeitpunkt das Empfangssignal empfangen wird und, falls dieser Zeitpunkt außerhalb des Regelzeitintervalls (101) liegt, dem Regler (44) ein neues Regelzeitintervall (101) vorzugeben.

5. Sensor (10) nach Anspruch 4,
wobei die Positionswechsel-Überwachungseinheit (44) dafür ausgebildet ist, das Empfangssignal anhand einer Signatur zu erkennen, insbesondere einem alternierenden Wechsel von Maxima auf Minima und umgekehrt, welche jeweils eine abfallende, insbesondere logarithmische Hüllkurve bilden.

6. Sensor (10) nach Anspruch 4 oder 5,
wobei die Positionswechsel-Überwachungseinheit (44) dafür ausgebildet ist, eine Historie zu speichern, welches Regelzeitintervall (101) sie jeweils bei der periodischen Überprüfung dem Regler (44) vorgegeben hätte, um dem Regler (44) dasjenige Regelzeitintervall (101) vorzugeben, welches gemäß einer statistischen Auswertung dieser Historie dasjenige des Empfangssignals ist.

7. Sensor (10) nach einem der Ansprüche 4 bis 6,
wobei die Positionswechsel-Überwachungseinheit (44) einen Agenten aufweist, also einen ständig oder in regelmäßigen zugeteilten Zeitschlitzen aktiven und von dem Regler (44) unabhängigen Prozess, wobei der Agent das Ziel hat, ein gültiges Regelzeitintervall (101) aufzufinden und dem Regler (44) vorzugegeben, in dem das Lichtsignal tatsächlich empfangen wird

8. Sensor (10) nach einem der vorhergehenden Ansprüche,
wobei die Auswertungseinheit (18) dafür ausgebildet ist, dem Regler (44) Sendezeitverzögerungen zur Verfügung zu stellen, die einem Vielfachen einer Abtastperiode für das Empfangssignal entsprechen.

9. Sensor (10) nach einem der vorhergehenden Ansprüche,
wobei eine Zeitbasiseinheit (38) vorgesehen ist, die eine DDS aufweist oder dafür ausgebildet ist, Sendezeitverzögerungen aus einem ersten Zeittakt mit einer ersten Frequenz (f1) und einem zweiten Zeittakt mit einer zu der ersten Frequenz (f1) ungleichen zweiten Frequenz (f2) abzuleiten und somit Sendezeitverzögerungen mit einer durch die zu der ersten und zweiten Frequenz (f1, f2) gehörige Differenzperiode gegebenen zeitlichen Auflösung dem Regler (44) zur Verfügung zu stellen.

10. Sensor (10) nach einem der vorhergehenden Ansprüche;
wobei eine Sendezeit-Feineinstelleinheit (40) vorgesehen ist, welche dafür ausgebildet ist, den jeweiligen Sendezeitpunkt innerhalb der Messperioden (100) um ein Offset zu verschieben, und wobei die Offsets eine Verteilung (56, 60) bilden, deren Schwerpunkt einen angestrebten Sendezeitpunkt bildet und der mit einer zeitlichen Auflösung gewählt werden kann, welche besser ist als sowohl die Abtastperiode wie die Differenzperiode, insbesondere mit einer zeitlichen Auflösung von weniger als zehn Pikosekunden oder sogar weniger als einer Pikosekunde.

11. Sensor (10) nach Anspruch 10,
wobei die Verteilung (56, 60) der Offsets unimodal ist, insbesondere gemäß einer Dreiecks-, Parabel- oder Gaussfunktion vorgegeben ist, und wobei ein Speicher vorgesehen ist, in dem für die Sendezeit-Feineinstelleinheit (40) eine Tabelle hinterlegt ist, welche für eine Vielzahl von Zeitinkrements eine zugehörige Offsetverteilung hält, insbesondere je eine Offsetverteilung für gleichmäßig verteilte Zeitinkrements.

12. Verfahren zur Messung von Entfernungen nach dem Lichtlaufzeitprinzip, bei dem ein Lichtsignal ausgesandt und das remittierte oder reflektierte Lichtsignal empfangen wird und bei dem durch systematische Wahl einer Sendeverzögerungszeit für das Aussenden des Lichtsignals zu einem Beobachtungszeitpunkt eine Übergangsbedingung für das Empfangssignal erfüllt und aus der hierfür erforderlichen Sendeverzögerungszeit die Lichtlaufzeit berechnet wird,
**dadurch gekennzeichnet,**
**dass** die Sendeverzögerungszeit mittels einer Regelung (44) in einer Feedbackschlaufe so nachgeführt wird, dass die Übergangsbedingung in dem Beobachtungszeitpunkt erfüllt ist und somit ein Empfangszeitpunkt des Empfangsignals mit dem Beobachtungszeitpunkt übereinstimmt.

13. Verfahren nach Anspruch 12,
wobei ein Regelzeitintervall (101), innerhalb dessen die Regelung (44) die Übergangsbedingung prüfen und die Sendeverzögerung nachführen kann, nur einem Teilbereich eines Messbereichs des Sensors (10) entspricht, und wobei periodisch überprüft wird, zu welchem Zeitpunkt das Empfangssignal empfangen wird und, falls dieser Zeitpunkt außerhalb des Regelzeitintervalls liegt (101), dem Regler (44) ein neues Regelzeitintervall (101) vorgegeben wird.

14. Verfahren nach Anspruch 12 oder 13,
wobei eine Historie gespeichert wird, welches Regelzeitintervall (101) jeweils bei einer periodischen Überprüfung der Regelung (44) vorzugeben wäre, um der Regelung (44) dasjenige Regelzeitintervall (101) vorzugeben, welches gemäß einer statistischen Auswertung dieser Historie dasjenige des Empfangssignals ist.

15. Verfahren nach einem der Ansprüche 12 bis 14,
wobei die periodische Überprüfung durch einen Agenten vorgenommen wird, also einen ständig oder in regelmäßigen zugeteilten Zeitschlitzen aktiven und von der Regelung (44) unabhängigen Prozess, wobei der Agent das Ziel hat, ein Regelzeitintervall (101) aufzufinden und der Regelung (44) vorzugegeben, in dem das Lichtsignal empfangen wird.

## Claims

1. An optoelectronic sensor (10) for the measurement of distances in accordance with the light transit time principle having a light transmitter (12) for the transmission of a light signal, having a light receiver (16) for the reception of a remitted or reflected received signal and having an evaluation unit (18) which is made to satisfy a transition condition for the received signal by systematic selection of a transmission delay time for the transmission of the light signal at an observation time and to calculate the light transit time from the transmission delay time required for this,
**characterized in that**
a regulator (44) is provided which is made to recognize whether a reception time of the received signal coincides with the observation time and to adjust the transmission delay time in a feedback loop such that the transition condition is satisfied at the observation time.

2. A sensor (10) in accordance with claim 1, wherein the evaluation unit (18) is made to trigger the transmission of a light signal at a transmission time preset via the transmission delay time in a respective measurement period (100) by the regulator (44) and to sample the received light signal and to accumulate a histogram (110) of such received light signals over a plurality of measurement periods (100) to determine the reception time from the histogram (110) and the light transit time from it, and wherein the check of the transition condition for the received signal takes place in the histogram (110).

3. A sensor (10) in accordance with claim 1 or 2, wherein a filter element (32) is provided in the reception path between the light receiver (16) and the evaluation unit (18) to convert the unipolar received signal into a bipolar signal, and wherein the transition condition in particular includes a zero crossing from the first maximum to the first minimum of the bipolar signal.

4. A sensor (10) in accordance with any of the preceding claims,
wherein a regulation time interval (101) within which the regulator (44) can check the transition condition and can adjust the transmission delay corresponds only to a partial range of a measurement range of the sensor (10), and wherein a change of position monitoring unit (44) is provided to check periodically the time at which the received signal is received and, if this time is outside the regulation time interval (101), to set a new regulation time interval (101) for the regulator (44).

5. A sensor (10) in accordance with claim 4, wherein the change of position monitoring unit (44) is preferably made to recognize the received signal with reference to a signature, in particular to an alternating change from maxima to minima and vice versa which each form a falling envelope, in particular a logarithmic envelope.

6. A sensor (10) in accordance with claim 4 or 5, wherein change of position monitoring unit (44) is preferably made to store a history of which regulation time interval (101) it would in each case have preset for the regulator (44) at the periodical check to preset that regulation time interval (101) for the regulator (44) which is that of the received signal in accordance with a statistical evaluation of this history.

7. A sensor (10) in accordance with any of claims 4 to 6, wherein the change of position monitoring unit (44) has an agent, that is a process which is active constantly or in regular assigned time slots and which is independent of the regulator (44), wherein the agent has the aim of locating a valid regulation time interval (101) and of setting it for the regulator (44) in which the light signal is actually received.

8. A sensor (10) in accordance with any of the preceding claims,
wherein the evaluation unit (18) is made to provide the regulator (44) with transmission time delays which correspond to a multiple of a sampling period for the received signal.

9. A sensor (10) in accordance with any of the preceding claims,
wherein a time base unit (38) is provided which has a DDS or is made to derive transmission time delays from a first time signal with a first frequency (f1) and a second time signal with a second frequency (f2) different from the first frequency (f1) and thus to provide transmission time delays to the regulator (44) with a time resolution given by the difference period belonging to the first and second frequencies (f1, f2).

10. A sensor (10) in accordance with any of the preceding claims;
wherein a unit (40) for the fine setting of a transmission time is provided which is made to shift the respective transmission time within the measurement periods (100) by an offset, and wherein the offsets form a distribution (56, 60) whose center of mass forms a desired transmission time and which can be selected with a time resolution which is better than both the sampling period and the
difference period, in particular with a time resolution of fewer than ten picoseconds or even less than one picosecond.

11. A sensor (10) in accordance with claim 10, wherein the distribution (56, 60) of the offsets is unimodal, is in particular preset in accordance with a triangular, parabolic or Gaussian function, and wherein a memory is provided in which a table for the unit (40) for the fine setting of a transmission time is stored which holds an associated offset distribution for a plurality of time increments, in particular one respective offset distribution for evenly distributed time increments.

12. A method for the measurement of distances in accordance with the light transit time principle in which a light signal is transmitted and the remitted or reflected light signal is received, and in which a transition condition for the received signal is satisfied by systematic selection of a transmission delay time for the transmission of the light signal at an observation time and the light transit time is calculated from the transmission delay time required for this,
**characterized in that**
the transmission delay time is adjusted by means of a regulation (44) in a feedback loop such that the transition period is satisfied at the observation time and, hence, a reception time of the received signal coincides with the observation time.

13. A method in accordance with claim 12, wherein a regulation time interval (101) within which the regulator (44) can check the transition condition and can adjust the transmission delay corresponds only to a partial range of a measurement range of the sensor (10), and wherein a check is made periodically of the time at which the received signal is received and, if this time is outside the regulation time interval (44), a new regulation time interval (101) is preset for the regulator (101).

14. A method in accordance with claim 12 or 13, wherein a history is saved of which regulation time interval (101) would be preset in each case on a periodic check of the regulation (44) to preset that regulation time interval (101) for the regulation (44) which is that of the received signal in accordance with a statistical evaluation of this history.

15. A method in accordance with any of claims 12 to 14, wherein the periodic check is carried out by an agent, that is by a process active constantly or at regular assigned time slots and independent of the regulation (44), wherein the agent has the goal of locating a regulation time interval (101) and of presetting it for the regulation (44) in which the light signal is received.

## Revendications

1. Capteur optoélectronique (10) pour la mesure de distances selon le principe du temps de parcours de la lumière, comprenant un émetteur de lumière (12) pour émettre un signal lumineux, un récepteur de lumière (16) pour recevoir un signal de réception réémis ou réfléchi, ainsi qu'une unité d'évaluation (18), laquelle est réalisée, par choix systématique d'un temps de retard d'émission pour l'émission du signal lumineux par rapport à un instant d'observation, pour satisfaire une condition de transition pour le signal de réception et pour calculer le temps de parcours de la lumière à partir du temps de retard d'émission nécessaire à cet effet,
**caractérisé en ce qu'**il est prévu un régulateur (44) qui est réalisé pour reconnaître si un instant de réception du signal de réception coïncide avec l'instant d'observation et pour réajuster le temps de retard d'émission, dans une boucle de rétroaction, de telle façon que la condition de transition à l'instant d'observation est satisfaite.

2. Capteur (10) selon la revendication 1,
dans lequel l'unité d'évaluation (18) est réalisée pour déclencher, dans une période de mesure respective (100), l'émission d'un signal lumineux à un instant d'émission prédéterminé par le régulateur (44) via le temps de retard d'émission, et le palpage du signal lumineux reçu, et d'accumuler sur une pluralité de périodes de mesure (100) un histogramme (110) de signaux lumineux reçus de cette manière, afin de déterminer à partir de l'histogramme (110) l'instant de réception et le temps de parcours de la lumière à partir de celui-ci, et dans lequel la vérification de la condition de transition pour le signal de réception a lieu dans l'histogramme (110).

3. Capteur (10) selon la revendication 1 ou 2,
dans lequel un élément filtrant (32) est prévu dans le trajet de réception entre le récepteur de lumière (16) et l'unité d'évaluation (18) afin de convertir le signal de réception unipolaire en un signal bipolaire, et dans lequel la condition de transition comprend en particulier un passage à zéro depuis le premier maximum vers le premier minimum du signal bipolaire.

4. Capteur (10) selon l'une des revendications précédentes,
dans lequel un intervalle temporel de régulation (101), à l'intérieur duquel le régulateur (44) peut vérifier la condition de transition et réajuster le retard d'émission, correspond seulement à une région partielle d'une zone de mesure du capteur (10), et dans lequel il est prévu une unité de surveillance de changement de position (44) pour vérifier périodiquement à quel instant est reçu le signal de réception et, si cet instant tombe à l'extérieur de l'intervalle temporel de régulation (101), pour imposer au régulateur (44) un nouvel intervalle temporel de régulation (101).

5. Capteur (10) selon la revendication 4,
dans lequel l'unité de surveillance de changement de position (44) est réalisée pour reconnaître le signal de réception au moyen d'une signature, en particulier un changement alternant de maxima à minima et inversement, qui forment respectivement une courbe enveloppe décroissante, en particulier de manière logarithmique.

6. Capteur (10) selon la revendication 4 ou 5,
dans lequel l'unité de surveillance de changement de position (44) est réalisée pour mémoriser un historique des intervalles temporels de régulation (101) qu'elle aurait imposé respectivement au régulateur (44) lors de la vérification périodique, afin d'imposer au régulateur (44) celui des intervalles temporels de régulation (101) qui, selon une évaluation statistique de cet historique, est celui du signal de réception.

7. Capteur (10) selon l'une des revendications 4 à 6,
dans lequel l'unité de surveillance de changement de position (44) comprend un agent, donc un processus actif en permanence ou actif dans des fenêtres temporelles associées régulièrement et indépendant du régulateur (44), dans lequel l'agent a pour but de découvrir un intervalle temporel de régulation valide (101), dans lequel le signal lumineux est effectivement reçu, et de l'imposer au régulateur (44).

8. Capteur (10) selon l'une des revendications précédentes,
dans lequel l'unité d'évaluation (18) est réalisée pour mettre à disposition du régulateur (44) des retards de temps d'émission qui correspondent à un multiple d'une période de palpage pour le signal de réception.

9. Capteur (10) selon l'une des revendications précédentes,
dans lequel est prévue une unité de base temporelle (38) qui comprend une DDS, ou qui est réalisée pour dériver des retards de temps d'émission à partir d'une première cadence temporelle avec une première fréquence (f1) et d'une seconde cadence temporelle avec une seconde fréquence (f2) différente de la première fréquence (f1), et ainsi mettre à disposition du régulateur (44) des retards de temps d'émission avec une résolution temporelle donnée par la période différentielle appartenant à la première et à la seconde fréquence (f1, f2).

10. Capteur (10) selon l'une des revendications précédentes,
dans lequel est prévue une unité de réglage fin du temps d'émission (40), laquelle est réalisée pour déplacer l'instant d'émission respectif à l'intérieur des périodes de mesures (100) à raison d'un offset, et dans lequel les offsets forment une répartition (56, 60) dont le barycentre forme un instant d'émission désiré et qui peut être choisi avec une résolution temporelle qui est meilleure aussi bien que la période de palpage que la période différentielle, en particulier avec une résolution temporelle inférieure à 10 picosecondes au même inférieure à une picoseconde.

11. Capteur (10) selon la revendication 10,
dans lequel la répartition (56, 60) des offsets est unimodale, en particulier selon une fonction triangulaire, parabolique ou une fonction de Gauss, et dans lequel est prévue une mémoire dans laquelle est déposé un tableau pour l'unité de réglage fin du temps d'émission (40), tableau qui contient une répartition d'offsets associés à une pluralité d'incréments temporels, en particulier une répartition d'offsets respective pour des incréments temporels à répartition régulière.

12. Procédé pour la mesure de distances selon le principe de temps de parcours de la lumière, dans lequel un signal lumineux est émis et le signal lumineux réémis ou réfléchi est reçu, et dans lequel, par choix systématique d'un temps de retard d'émission pour l'émission du signal lumineux par rapport à un instant d'observation, on satisfait une condition de transition pour le signal de réception et on calcule le temps de parcours de la lumière à partir du temps de retard d'émission nécessaire à cet effet,
**caractérisé en ce que** le temps de retard d'émission est réajusté au moyen d'une régulation (44) dans une boucle de rétroaction de telle façon que la condition de transition est satisfaite à l'instant d'observation et ainsi qu'un instant de réception du signal de réception coïncide avec l'instant d'observation.

13. Procédé selon la revendication 12,
dans lequel un intervalle temporel de régulation (101), à l'intérieur duquel la régulation (44) vérifie la condition de transition et peut réajuster le retard d'émission, correspond uniquement à une zone partielle d'une plage de mesure du capteur (10), et dans lequel on vérifie périodiquement à quel instant le signal de réception est reçu et, si cet instant tombe à l'extérieur de l'intervalle temporel de régulation (101), un nouvel intervalle temporel de régulation (101) est imposé au régulateur (44).

14. Procédé selon la revendication 12 ou 13,
dans lequel on mémorise un historique des intervalles temporels de régulation (101) qui seraient imposés respectivement à la régulation (44) lors d'une vérification périodique, pour imposer à la régulation (44) celui des intervalles temporels de régulation (101) qui, selon une évaluation statistique de cet historique, est celui du signal de réception.

15. Procédé selon l'une des revendications 12 à 14,
dans lequel la vérification périodique est exécutée par un agent, donc un processus actif en permanence ou actif dans des fenêtres temporelles associées régulières, et indépendant de la régulation (44), dans lequel l'agent a pour but de découvrir un intervalle temporel de régulation (101) dans lequel le signal lumineux est reçu, et de l'imposer à la régulation (44).
